(19)

Europäisches Patentamt
European Patent Office
Office européen des brevets

(11) **EP 3 327 641 A1**

(12) **EUROPEAN PATENT APPLICATION**

(43) Date of publication:
**30.05.2018 Bulletin 2018/22**

(51) Int Cl.:
***G06Q 10/06*** *(2012.01)*

(21) Application number: **17196520.5**

(22) Date of filing: **16.10.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.11.2016 JP 2016217579**
**18.01.2017 JP 2017007077**

(71) Applicant: **FUJITSU LIMITED**
**Kanagawa 211-8588 (JP)**

(72) Inventor: **MURAKAMI, Ryo**
**Kawasaki-shi, Kanagawa 211-8588 (JP)**

(74) Representative: **Haseltine Lake LLP**
**Lincoln House, 5th Floor**
**300 High Holborn**
**London WC1V 7JH (GB)**

(54) **JOB PLANNING DEVICE, JOB PLANNING METHOD, AND JOB PLANNING PROGRAM**

(57)     A job planning device includes: an assignment unit configured to assign workers to a production line and assign a job, a tool required, and/or equipment required to each worker of the workers; a calculation unit configured to calculate depreciation per predetermined period of time in a whole of the production line based on depreciation of the tool and/or the equipment and a labor cost of the production line per the predetermined period of time based on overtime hours of the each worker calculated from a takt time of the production line and individual cycle times of the workers working in the production line; and a determination unit configured to calculate a sum of costs calculated by the calculation unit with respect to each assignment plan created by the assignment unit, and determine workers, tools, and/or equipment to be actually assigned to the production line based on the sum.

FIG. 2

**Description**

FIELD

A certain aspect of embodiments described herein relates to a job planning device, a job planning method, and a job planning program.

BACKGROUND

In job planning for assigning jobs to stations of an assembly line for assembling products, the optimization is conducted taking into consideration the compliance with the order of jobs at the stations and the balance of workloads among the stations. It is difficult to manually conduct the optimization. Thus, there have been suggested techniques for providing information about points to be considered in job planning to an operator (see Japanese Patent Application Publication No. 7-287730, for example) and various techniques using algorithms.

The assignment of jobs to the stations becomes necessary not only when launching an assembly line for the first time but also when reconfiguring the assembly line because of production fluctuation or resource fluctuation as disclosed in, for example, Japanese Patent Application Publication No. 7-182425.

SUMMARY

The present invention has been made in view of those circumstances, and it is desirable to provide a job planning device, a job planning method, and a job planning program enabling to easily conduct job planning. It is further desirable to provide a job planning device, a job planning method, and a job planning program capable of reducing a change of a person or robot to which a job has been assigned when jobs are reassigned to persons or robots.

According to an aspect of an embodiment, there is provided a job planning device including: an assignment unit configured to assign workers to a production line and assign a job, a tool required, and/or equipment required to each worker of the workers; a calculation unit configured to calculate depreciation per predetermined period of time in a whole of the production line based on depreciation of the tool and/or the equipment and a labor cost of the production line per the predetermined period of time based on overtime hours of the each worker calculated from a takt time of the production line and individual cycle times of the workers working in the production line; and a determination unit configured to calculate a sum of costs calculated by the calculation unit with respect to each assignment plan created by the assignment unit, and determine workers, tools, and/or equipment to be actually assigned to the production line based on the sum.

BRIEF DESCRIPTION OF DRAWINGS

The invention is described, by way of example only, with reference to the following drawings, in which:

FIG. 1 schematically illustrates a configuration of a job planning device in accordance with a first embodiment;
FIG. 2 is a functional block diagram of the job planning device of the first embodiment;
FIG. 3 illustrates a configuration example of an assembly line;
FIG. 4A illustrates a data structure of a job DB, and FIG. 4B illustrates a data structure of a tool/equipment/robot DB:
FIG. 5A illustrates a data structure of a labor cost DB (skill level basis), and FIG. 5B illustrates a data structure of another labor cost DB (individual basis);
FIG. 6 is a diagram for describing the order of jobs in the assembly line;
FIG. 7 is a diagram for describing an objective function (1);
FIG. 8A and FIG. 8B are diagrams for describing an objective function (2);
FIG. 9 is a diagram for describing an objective function (3);
FIG. 10 is a diagram for describing an objective function (4);
FIG. 11 is a diagram for describing objective functions (5) and (6);
FIG. 12 is a flowchart of an overall process;
FIG. 13 is a flowchart of a process for setting an objective function to be calculated;
FIG. 14 is a flowchart of a process for calculating the objective function (1);
FIG. 15 is a flowchart of a process for calculating the objective function (2);
FIG. 16 is a flowchart of a process for calculating the objective function (3);
FIG. 17 is a flowchart of a process for calculating the objective function (4);
FIG. 18 is a flowchart of a process for calculating the objective function (5);
FIG. 19 is a flowchart of a process for calculating the objective function (6);

FIG. 20 illustrates a variation of the first embodiment;
FIG. 21 schematically illustrates a hardware configuration of a job planning device in accordance with a second embodiment;
FIG. 22 is a functional block diagram of the job planning device of the second embodiment;
FIG. 23 is a diagram for describing an assembly line;
FIG. 24A and FIG. 24B are diagrams for describing the rearrangement of jobs in the assembly line;
FIG. 25 illustrates a data structure of the job DB;
FIG. 26 is a diagram for describing the order of jobs in the assembly line;
FIG. 27 is a flowchart of a rearrangement process by the job planning device;
FIG. 28 is a flowchart of a specific process at step S1022 of FIG. 27;
FIG. 29A through FIG. 29C are diagrams for describing step S1014 in FIG. 27; and
FIG. 30 illustrates a variation of the second embodiment.

DESCRIPTION OF EMBODIMENTS

As the techniques using algorithms, there has been known a technique that creates an objective function and then searches the optimal solution according to the objective function. In this technique, when there are a plurality of optimization items, it is common to create objective functions for the individual items and then create an overall objective function based on the weighted sum. However, the weights for the weighted sum, i.e., which item is to be emphasized to what extent is unobvious. Thus, the weights need to be determined through a trial and error process with respect to each assembly line. It is a burdensome task that requires experience and intuition.

In addition, when the assembly line is reconfigured because of production fluctuation or resource fluctuation, the change of a person or robot that takes in charge of a job necessitates preparations such as re-education of the person or re-teaching of the robot. In this case, the preparations require time and effort.

First Embodiment

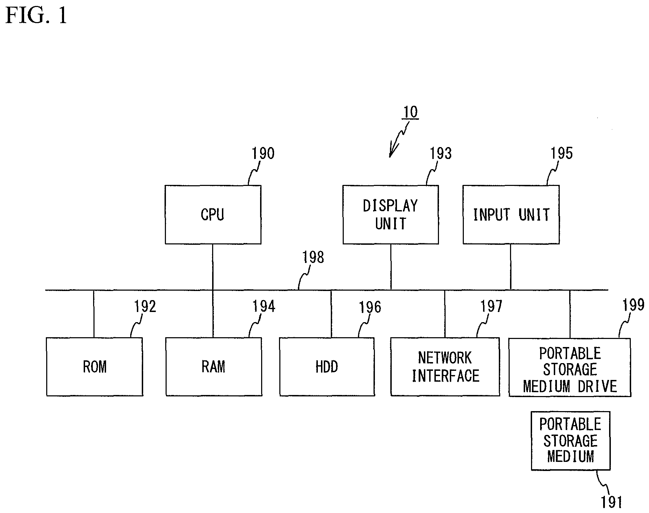

Hereinafter, a job planning device in accordance with a first embodiment will be described with reference to FIG. 1 through FIG. 19.

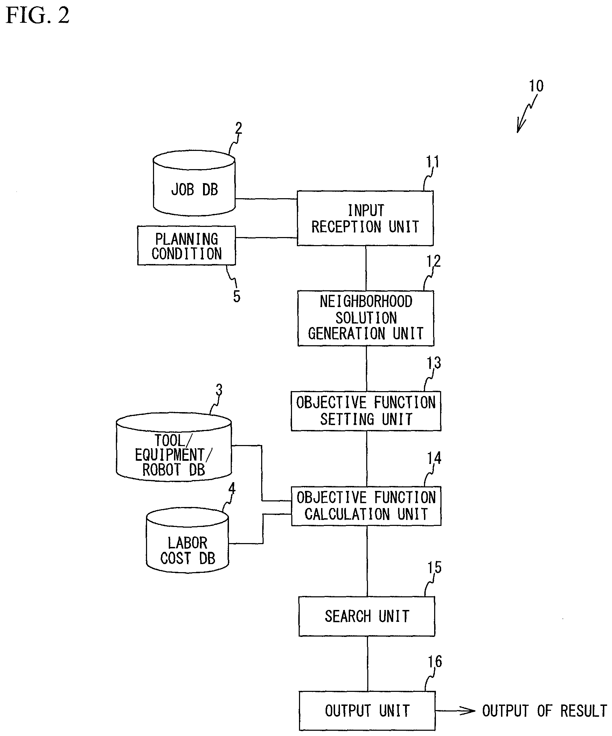

FIG. 1 illustrates a hardware configuration of a job planning device 10 in accordance with the first embodiment. The job planning device 10 of the first embodiment is an information processing device such as, for example, a personal computer (PC), and includes a central processing unit (CPU) 190, a read only memory (ROM) 192, a random access memory (RAM) 194, a storage unit (here, a hard disk drive (HDD)) 196, a network interface 197, a portable storage medium drive 199, a display unit 193, and an input unit 195 as illustrated in FIG. 1. The display unit 193 includes a liquid crystal display or the like, and the input unit 195 includes a keyboard and a mouse, a touch panel, or the like. These components of the job planning device 10 are coupled to a bus 198. In the job planning device 10, the functions of each unit illustrated in FIG. 2 are implemented by the execution of programs (including a job planning program) stored in the ROM 192 or the HDD 196 or programs (including the job planning program) read from a portable storage medium 191 by the portable storage medium drive 199 by the CPU 190. FIG. 2 also illustrates a job database (DB) 2, a tool/equipment/robot DB 3, and a labor cost DB 4 stored in the HDD 196 or the like of the job planning device 10. Examples of the portable storage medium 191 include a portable storage medium such as a CD-ROM, a DVD disc, and a universal serial bus (USB) memory, and a semiconductor memory such as a flash memory.

FIG. 2 is a functional block diagram of the job planning device 10. The execution of the program by the CPU 190 implements an input reception unit 11, a neighborhood solution generation unit 12 as an assignment unit, an objective function setting unit 13, an objective function calculation unit 14 as a calculation unit, a search unit 15 as a determination unit, and an output unit 16 in the job planning device 10 as illustrated in FIG. 2.

The job planning device 10 is a device that conducts job planning for assigning (allocating) jobs to stations based on the DBs 2, 3, and 4 and input data such as a planning condition 5 and outputs the result of the job planning when an assembly line (a production line) is launched or when the reconfiguration of the assembly line becomes necessary because of production fluctuation or resource fluctuation.

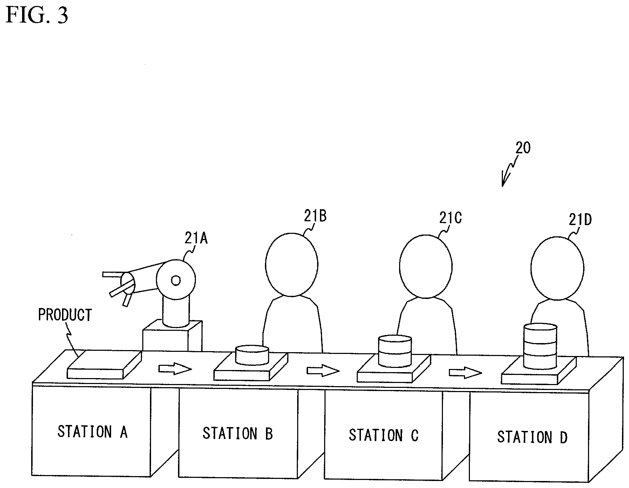

FIG. 3 is a diagram for describing an assembly line. As illustrated in FIG. 3, it is assumed that an assembly line 20 for assembling products includes four stations: a station A through a station D as an example.

In the assembly line 20, the product is conveyed from the station to the station by a belt conveyor (not illustrated). A robot 21 A and operators 21B through 21D are assigned to the stations of the assembly line 20. In the example of FIG. 3, the robot 21 A is assigned to the station A, and the operators 21B through 21D are respectively assigned to the station B through the station D. The robot 21A and the operators 21 B through 21 D respectively assigned to the station A through the station D produce products by executing jobs assigned through job planning or job rearrangement to the products conveyed in the assembly line 20.

The configuration example of the assembly line 20 is not limited to the configuration illustrated in FIG. 3. For example, the assembly line 20 may include four or more stations. In addition, the robot 21A may be assigned to other than the station A, and the number of robots may be two or more.

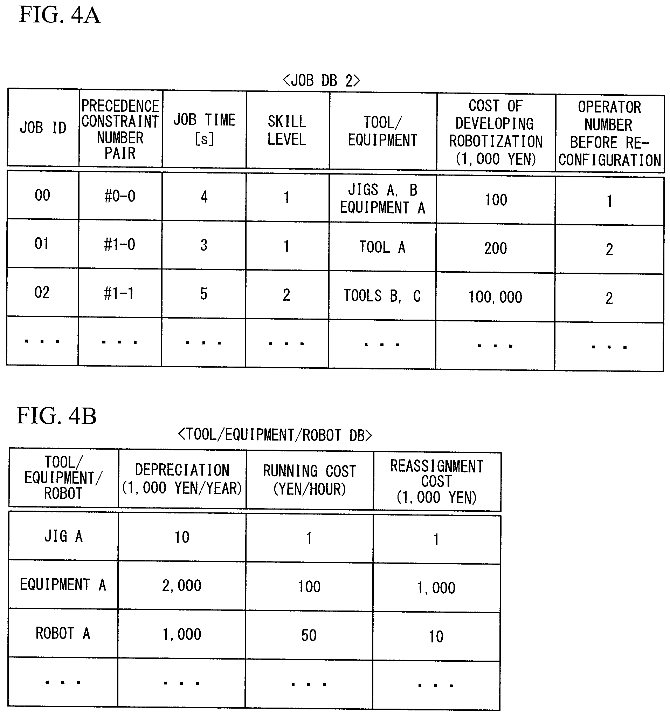

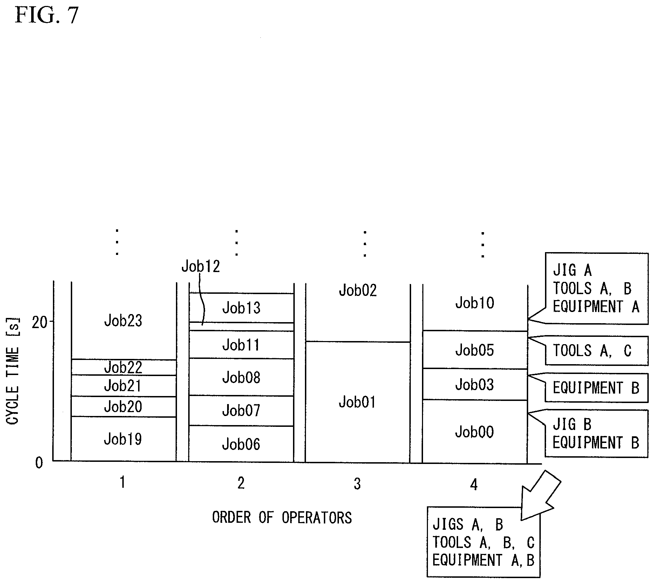

Referring back to FIG. 2, the input reception unit 11 receives the input of the planning condition 5 through the operation input by an administrator. The input reception unit 11 also refers to the job DB 2 that stores various information about jobs to be assigned in the job planning. It is assumed that the planning condition 5 of which the input is received by the input reception unit 11 is also used by the neighborhood solution generation unit 12, the objective function setting unit 13, the objective function calculation unit 14, and the search unit 15. It is also assumed that the neighborhood solution generation unit 12, the objective function setting unit 13, the objective function calculation unit 14, and the search unit 15 refer to the job DB 2 through the input reception unit 11. The job DB 2 has a data structure illustrated in FIG. 4A. More specifically, the job DB 2 has "job ID", "precedence constraint number pair", "job time", "skill level", "tool/equipment", "cost of developing robotization", and "operator number before reconfiguration" fields as illustrated in FIG. 4A. The "job ID" field stores an identification number of the job (a two-digit number subsequent to "Job" illustrated in FIG. 7 through FIG. 8B). The "precedence constraint number pair" field stores a number pair representing the parent-child relation of the job. The precedence constraint number pair enables to know which work is to be done next to which work. The details of the precedence constraint number pair will be described later. The "job time" field stores the amount of time (second) it takes to complete the job. The "skill level" field stores the skill level permitted to execute the job. For example, a job with a skill level of 2 is a job that an operator with a skill level of 2 or greater (2, 3 ...) is permitted to execute. The "tool/equipment" field stores information about tools or equipment used for the job. The "cost of developing robotization" field stores the cost required for development or teaching when the job is caused to be executed by a robot. The "operator number before reconfiguration" field stores the number of the operator to which the job was assigned before the reconfiguration. The "operator number before reconfiguration" is blank for the job to which the job planning has not been executed at all.

Here, the precedence constraint number pair in the job DB 2 will be described in detail. The precedence constraint number pair is a number pair representing the order constraint indicating the constraint condition for the order of jobs for assembling product into finished product. More specifically, the order constraint is information capable of expressing the order relation of nodes representing individual jobs up to a finished product by a directed acyclic graph.

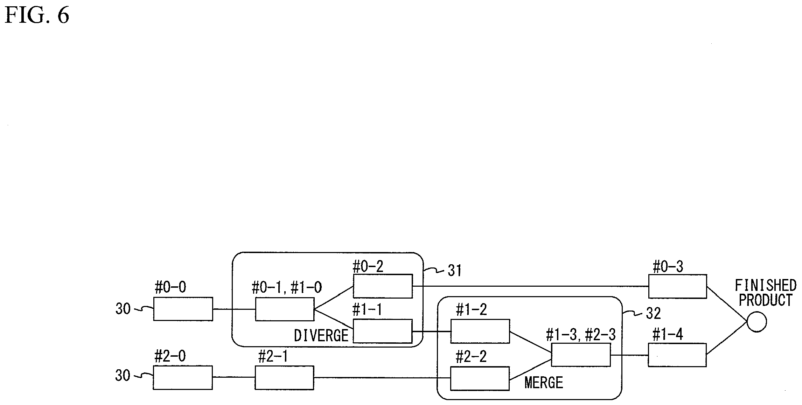

FIG. 6 is a diagram for describing the order of jobs in the assembly line 20. In FIG. 6, a node 30 represents a job. When there is an anteroposterior relation between two nodes 30, drawn is an arrow originating at the job to be done first (parent node) and terminating at the job to be done next (child node). As illustrated in FIG. 6, the order relation of the nodes 30 up to a finished product (the order of jobs) is expressed by a directed acyclic graph.

To express the order relation, in the job DB 2, the number "#[family number] - [generation number]" is given to the job (the node 30) based on the order constraint. More specifically, when the number for the parent node is #i - j, the number #i - (j + 1) is given to the child node. In a diverging part 31 including a plurality of child nodes, a new family number "k" is given to subsequent child nodes instead of "i", and #k - 0 is newly given to the parent node, and #k - 1 is newly given to the child node.

In a merging part 32 including a plurality of parent nodes, a plurality of numbers are given from the parents nodes to the child node, but the next child node does not necessarily take over all the numbers. That is, the smallest number of the family numbers (the oldest number in the number-giving order) is given to the child node next to the merging part 32.

The job planning device 10 is able to evaluate the presence or absence of violations of the precedence constraint by using the numbers given to the jobs (the nodes 30) and handling, as a violation, the assignment of the older generation (parent) to a station posterior to the station to which the younger generation (child) is assigned in the same family.

Referring back to FIG. 2, the planning condition 5 includes various conditions for conducting job planning, and is set based on the operation input through the input unit 195 by the administrator. For example, the planning condition 5 includes an "algorithm used for initial assignment", a "search algorithm to be used", and a "search stopping condition". In the first embodiment, the administrator selects from heuristic methods including a first fit method and a strongest fit method an algorithm used for initial assignment of jobs to stations. The administrator also selects from, for example, a hill climbing method, a tabu search, simulated annealing, and the like a search algorithm used to obtain the combination of jobs assigned to each station. These selected algorithms are the "algorithm used for initial assignment" and the "search algorithm to be used" included in the planning condition 5. Furthermore, the administrator sets a predetermined value for stopping a search when the sum of objective functions becomes equal to or less than the predetermined value and the maximum search time as the conditions for stopping the search of the combination of jobs assigned to each station. This stopping condition is the "search stopping condition" included in the planning condition 5.

The neighborhood solution generation unit 12 generates an initial assignment plan of jobs to the stations (operators) included in the planning condition 5 based on the planning condition 5 and the job information in the job DB 2. The neighborhood solution generation unit 12 generates neighborhood solutions based on the initial assignment plan of jobs to the stations (the operators).

The objective function setting unit 13 sets which objective function of a plurality of objective functions is to be used based on the status of the assembly line. For example, the objective function setting unit 13 sets which of a plurality of objective functions is to be used based on whether the tool/equipment/robot that are not fully depreciated yet is to be used, whether the job planning is rearrangement based on the existing job plan of the line, whether a robot is to be used in the assembly line, and the like.

The objective function calculation unit 14 calculates the objective function, which has been set as the objective function to be used by the objective function setting unit 13, with respect to each neighborhood solution based on the job DB 2, the tool/equipment/robot DB 3, and the labor cost DB 4.

The tool/equipment/robot DB 3 has a data structure illustrated in FIG. 4B. As illustrated in FIG. 4B, the tool/equipment/robot DB 3 has "tool/equipment/robot", "depreciation", "running cost" and "reassignment cost" fields. The "tool/equipment/robot" field stores identification information of a tool, equipment, or a robot, and the "depreciation" field stores the depreciation of the tool, the equipment, or the robot for one year. The depreciation of a fully depreciated tool is 0 yen. The "running cost" field stores the running cost of the tool, the equipment, or the robot per hour, and the "reassignment cost" field stores the cost required for the reassignment of the tool, the equipment, or the robot in rearrangement.

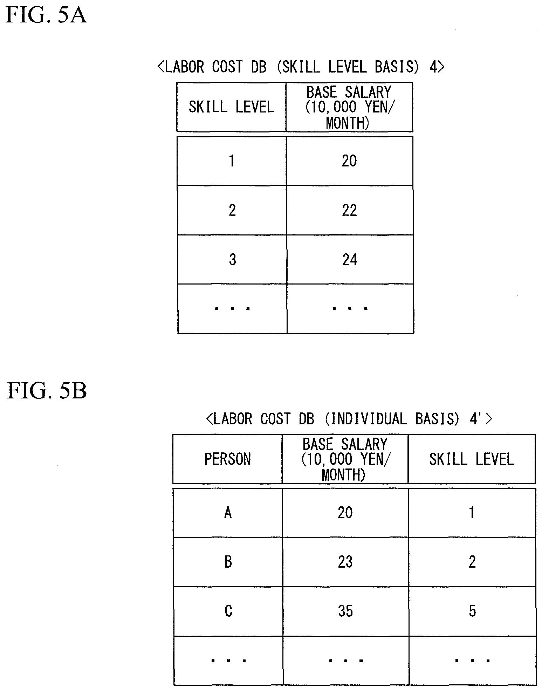

The labor cost DB 4 has a data structure illustrated in FIG. 5A. The labor cost DB 4 illustrated in FIG. 5A is a database that stores information about the base salaries of workers on a skill level basis. The labor cost DB may be a labor cost DB 4' illustrated in FIG. 5B that stores information about the base salary and the skill level of each worker.

Hereinafter, the objective functions calculated by the objective function calculation unit 14 will be described.

(a) Objective Function (1)

The objective function (1) represents an optimization item that is the reduction in the number of tools and equipment required in the assembly line as a whole, and expresses the number of tools and equipment required in the assembly line by a unit of "yen/day".

A plurality of jobs are assigned to each operator assigned to the assembly line. Requisite tools/equipment are associated with each job (see, for example, the job DB 2 in FIG. 4A).

In the first embodiment, the objective function calculation unit 14 calculates the numbers $n_i$ of individual tools and equipment i = 1, 2, ..., N required in the assembly line as a whole, and calculates costs $a_i$ per day for individual tools and equipment based on the individual depreciation of the tools and equipment. Even when a tool and equipment are an existing tool and existing equipment, the required number $n_i$ and the cost $a_i$ thereof are calculated as long as the tool and the equipment are not fully depreciated. The objective function calculation unit 14 generates an objective function $E_1$ based on the following equation (1).

$$E_1 \equiv \sum_{i=1}^{N} a_i n_i \qquad (1)$$

The required number $n_i$ of each tool or equipment is required to be counted so as not to double count the same tool and the same equipment used by the same worker for a different job. For example, the worker who is fourth in the order of operators illustrated in FIG. 7, the requisite equipment B for the job "Job00" assigned to the operator overlaps with the requisite equipment B for the job "Job03". In this case, the equipment B is to be counted only once. The tool A for the job "Job05" and the tool A for the job "Job10" overlap. In this case, the tool A is to be counted only once. When operators are different, the same tool and the same equipment are to be redundantly counted.

(b) Objective Function (2)

The objective function (2) represents an optimization item that is the reduction in the number of reassignments at the time of reconfiguration of the assembly line, and expresses the number of reassignments by a unit of "yen/day".

In the first embodiment, the objective function calculation unit 14 converts costs required for the reassignments of individual tools and equipment i = 1, 2, ... , N into costs $b_i$ per day based on the interval of reconfiguration (the elapsed time after the previous planning).

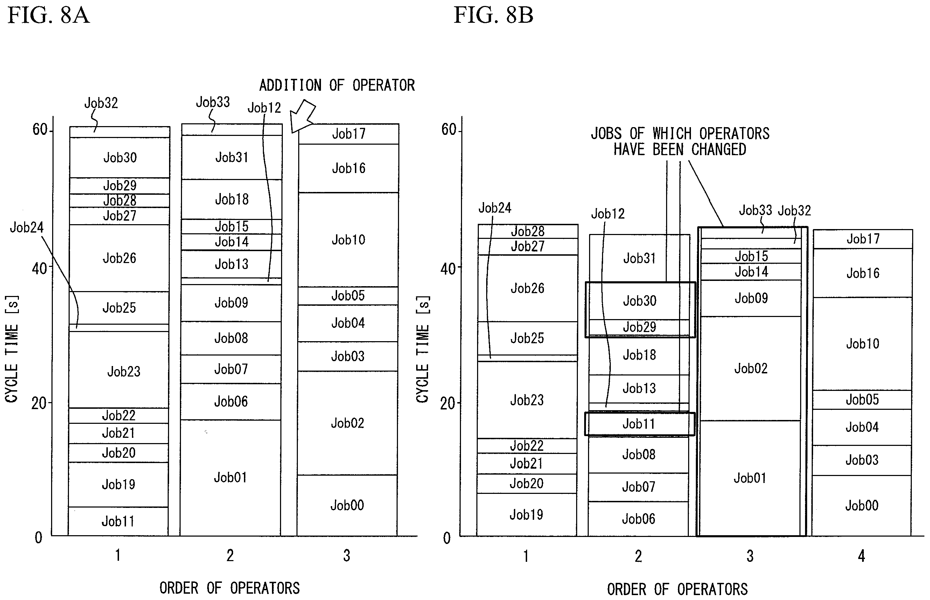

The objective function calculation unit 14 then identifies a tool/equipment i, where i E B, used in the job that has been reassigned. FIG. 8A illustrates a job plan before reconfiguration, and FIG. 8B illustrates a job plan after the reconfiguration. In the examples of FIG. 8A and FIG. 8B, between before and after the reconfiguration illustrated in FIG. 8A and FIG. 8B, Job30, Job29, Job11, and the jobs that were assigned to the operator that is third in the order of operators are reassigned. Thus, the set B includes the tool numbers and the equipment numbers of the tools and equipment used in these jobs. The objective function calculation unit 14 sets the sum of the costs $b_i$ of individual tools/equipment as the objective function $E_2$ as presented in the following equation (2).

$$E_2 \equiv \sum_{i \in B} b_i \qquad (2)$$

(c) Objective Function (3)

The objective function (3) represents an optimization item that is the degree of ease of robotization in the assembly line, and expresses the degree of ease of robotization by a unit of "yen/day".

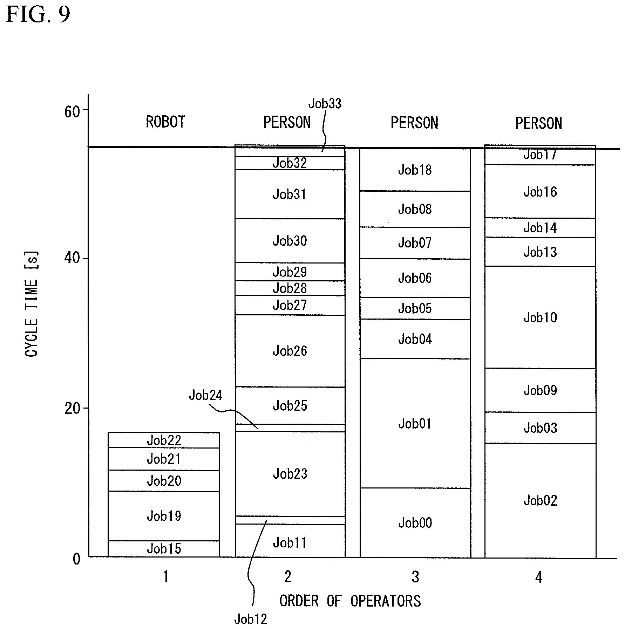

The objective function calculation unit 14 calculates costs $c_j$ required for robotization per day based on the costs (the development cost and the teaching cost) required for robotization of individual jobs j = 1, 2, ... , J and the interval of reconfiguration. The objective function calculation unit 14 also calculates the set j of jobs assigned to a robot, where $j \in C$, as illustrated in FIG. 9. FIG. 9 illustrates an example of a job plan when a robot is assigned to the assembly line. In the example of FIG. 9, C = { 15, 19, 20, 21, 22}.

The objective function calculation unit 14 sets the sum of the costs required for robotization per day as an objective function $E_3$ presented by the following equation (3).

$$E_3 \equiv \sum_{j \in C} c_j \qquad (3)$$

(d) Objective Function (4)

The objective function (4) represents an optimization item that is the minimization of the operating time of the robot in the assembly line, and expresses the operating time of the robot in the assembly by a unit of "yen/day".

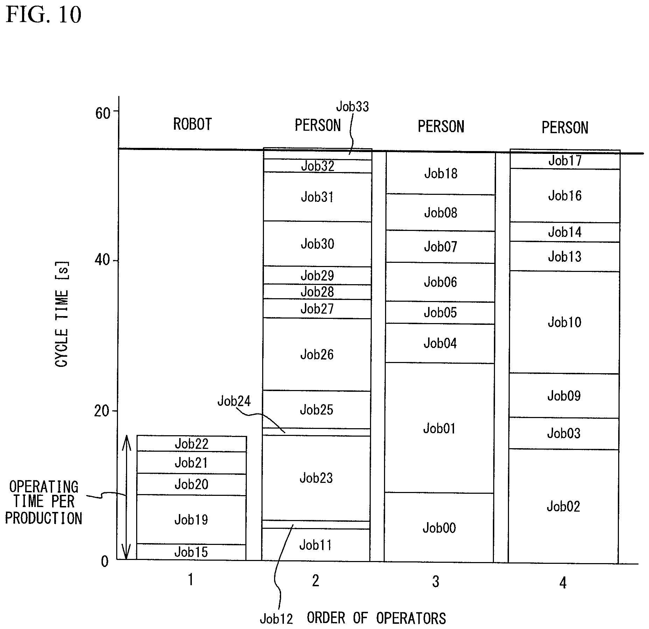

The objective function calculation unit 14 calculates the operating time of a robot k per product (see FIG. 10) based on the sum of the job time $t_j$ of the job j assigned to each robot k = 1, 2,..., K, where $j \in D_k$. In the example of FIG. 10, the set $D_k$ is $D_k$ = {15,19, 20, 21, 22}.

In this case, the objective function calculation unit 14 may calculate (estimate) the job time $t_j$ of the robot by multiplying the job time (s) preliminarily stored in the job DB 2 by a predetermined rate, or may read the job time $t_j$ of the robot from the job DB 2 when the job time of the robot is preliminarily stored in association with each job ID in the job DB 2.

The objective function calculation unit 14 sets the running cost of the robot per day calculated by multiplying the running cost $d_k$ (yen/hour) of the robot by the operating time per day (operating time per product × number P of products manufactured per day) as an objective function $E_4$ as presented by the following equation (4).

$$E_4 \equiv P \sum_{i=1}^{N} d_k \sum_{j \in D_k} t_j \qquad (4)$$

(e) Objective Function (5)

The objective function (5) represents an optimization item that is the reduction in the number of highly skilled persons, and expresses the number of highly skilled persons by a unit of "yen/day".

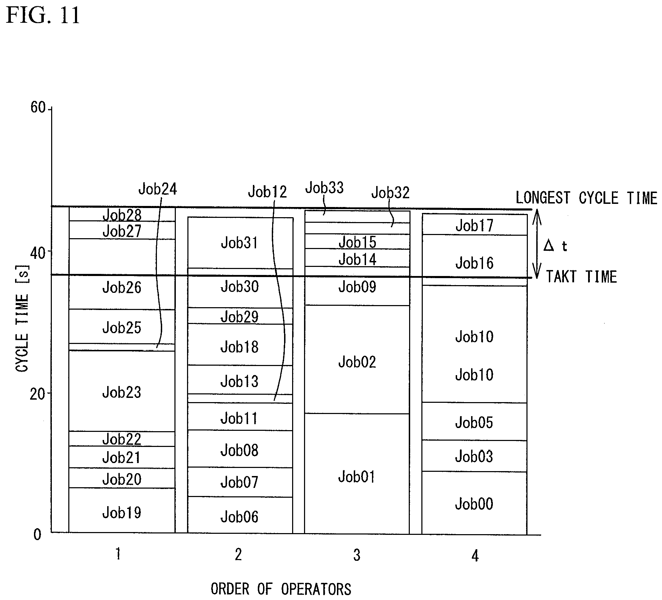

The objective function calculation unit 14 calculates costs $e_l$ per unit time based on the base salaries of individual workers 1= 1, 2, ... , L. The objective function calculation unit 14 defines the difference between the longest cycle time and a takt time t illustrated in FIG. 11 as an excess time $\Delta t$. When the longest cycle time is less than the takt time, $\Delta t$ is assumed to be 0. P × (t + s$\Delta t$) using the number P of products manufactured per day is calculated by correcting the labor time per day by the addition rate of the overtime charge. P ×$\Delta t$ corresponds to overtime hours. In the production line, all workers are forced to stay for overtime hours P ×$\Delta t$.

In this case, the objective function calculation unit 14 sets the value calculated by multiplying the sum of the costs $e_l$ by the value calculated by correcting the labor time per day by the addition rate (s) of the overtime charge as an objective function $E_5$ as presented by the following equation (5).

$$E_5 \equiv P(t + s\Delta t) \sum_{l=1}^{L} e_l \qquad (5)$$

(f) Objective Function (6)

The objective function (6) represents an optimization item that is the balancing of workloads of persons, and expresses the balancing of workloads of persons by a unit of "yen/day".

The objective function calculation unit 14 creates an objective function $E_6$, under the assumption that each of all workers costs a uniform cost $e_c$ without considering the base salary of each worker that is taken into consideration in the objective function (5), by multiplying the sum of the costs $e_c$ by the value calculated by correcting the labor time per day by the addition rate (s) of the overtime charge as presented in the following equation (6).

$$E_6 \equiv P(t + s\Delta t)L \cdot e_c \qquad (6)$$

Referring back to FIG. 2, the search unit 15 solves the optimization problem under the condition that the sum of the objective functions calculated by the objective function calculation unit 14 is to be minimized to search a job plan including the combination of jobs assigned to each of the stations (A through D).

The output unit 16 outputs the job plan searched by the search unit 15 (the result of reconfiguration) by file output or display output to a display.

Planning Process by the Job Planning Device 10

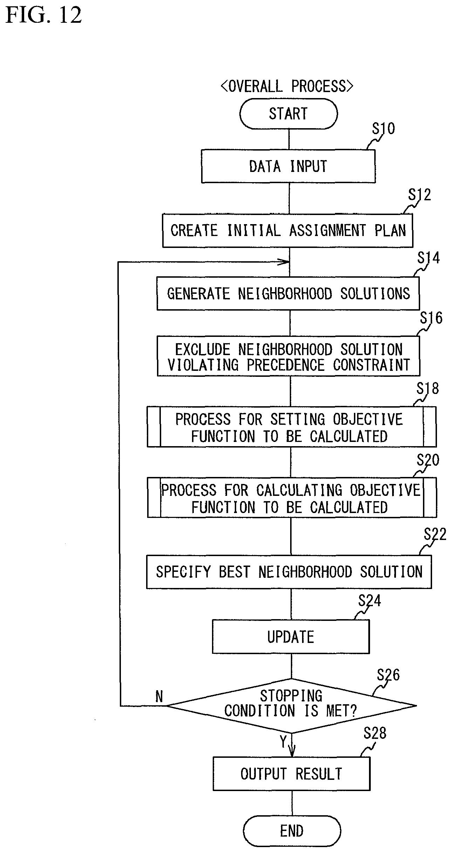

A description will be given of a planning process by the job planning device 10 of the first embodiment along flowcharts of FIG. 12 through FIG. 19 with reference to other drawings as necessary.

Overall Process (FIG. 12)

The overall process by the job planning device 10 will be described along the flowchart of FIG. 12.

In the process of FIG. 12, at step S10, the input reception unit 11 receives the input of data such as the planning condition 5 and the job DB 2. Then, at step S12, the neighborhood solution generation unit 12 creates an initial assignment plan of the jobs included in the planning condition 5 to the stations (the operators). More specifically, the neighborhood solution generation unit 12 creates the initial assignment plan by using a heuristic method such as the first fit method, the strongest fit method, or the like based on the algorithm used for initial assignment included in the planning condition 5.

Then, at step S 14, the neighborhood solution generation unit 12 generates neighborhood solutions from the initial assignment plan of the jobs to the stations (the operators). More specifically, the neighborhood solution generation unit 12 generates neighborhood solutions by reversing two jobs of assigned jobs or moving one job.

Then, at step S16, the neighborhood solution generation unit 12 excludes the neighborhood solution that violates the precedence constraint from the neighborhood solutions. For example, excluded is the neighborhood solution that assigns the older generation (parent) to a station posterior to the station to which the younger generation (child) is assigned in the same family and thereby violates the precedence constraint.

Then, at step S18, the objective function setting unit 13 executes a subroutine for a process of setting an objective function to be calculated. In this subroutine, the objective function setting unit 13 determines which of the above objective functions (1) through (6) is to be used. The details of this process will be described later.

Then, at step S20, the objective function calculation unit 14 executes a subroutine for a process of calculating the objective functions determined at step S16 (the objective functions to be calculated). The details of this process will be described later.

At step S22, the search unit 15 obtains the calculation results of the objective function calculation unit 14, and specifies the best neighborhood solution of which the sum of the calculated objective functions is minimal.

Then, at step S24, the search unit 15 updates a memory by using the neighborhood solution of which the sum of the objective functions is minimal. When the neighborhood solution is already stored in the memory, the search unit 15 stores the neighborhood solution of which the sum of the objective function is less between the stored neighborhood solution and the neighborhood solution specified at step S22. Then, at step S26, the search unit 15 determines whether the stopping condition is met. For example, the search unit 15 determines that the stopping condition is met when the sum of the objective functions becomes equal to or less than the predetermined value or when the search time exceeds the maximum search time. When the determination at step S26 is NO, the process returns to step S14 while the process moves to step S28 when the determination is YES.

At step S28, the output unit 16 outputs the neighborhood solution stored in the memory.

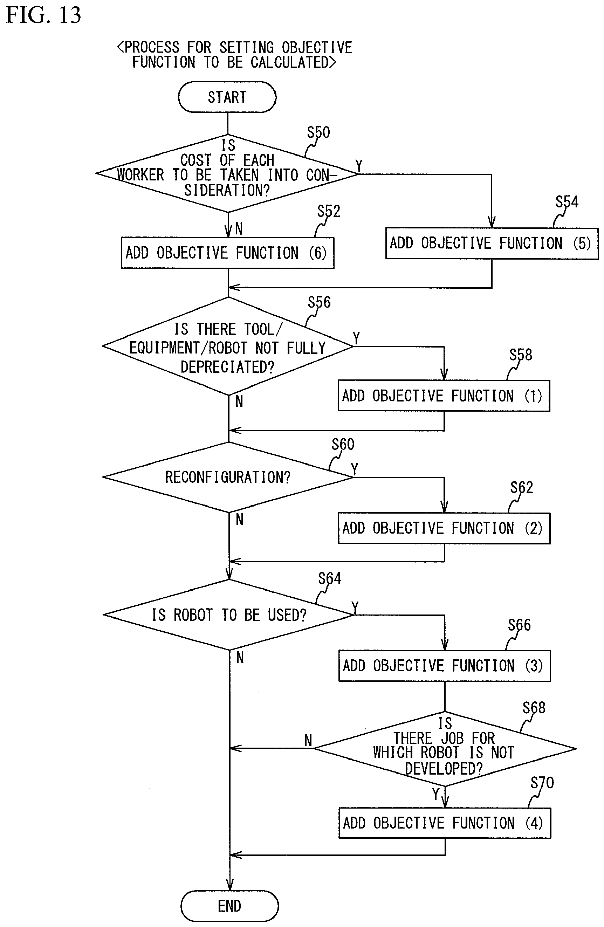

Process for Setting the Objective Function to be Calculated (FIG. 13)

A description will next be given of the setting process of the objective function to be calculated executed by the objective function setting unit 13 along the flowchart of FIG. 13. The process of FIG. 13 is a process that selects from the objective functions (1) through (6) an objective function to be calculated by the objective function calculation unit 14 at step S20 and adds the selected objective function to a list.

At step S50 of FIG. 13, the objective function setting unit 13 determines whether the cost of each worker is to be taken into consideration. For example, when the planning condition 5 or the input content from the administrator includes the content indicating that the cost is to be taken into consideration, the determination at step S50 becomes YES, and the process moves to step S54. In the case of NO, the process moves to step S52.

When the process moves to step S52, that is, when the cost of the worker is not taken into consideration, the objective function setting unit 13 adds the objective function (6) to the list. On the other hand, when the process moves to step S54, that is, when the cost of the worker is to be taken into consideration, the objective function setting unit 13 adds the objective function (5) to the list. After step S52 or S54, the process moves to step S56.

At step S56, the objective function setting unit 13 determines whether a tool, equipment, or a robot that has not been fully depreciated exists in the neighborhood solution. When the determination at step S56 is YES, the process moves to step S58, the objective function setting unit 13 adds the objective function (1) to the list, and then the process moves to step S60. On the other hand, when the determination at step S56 is NO, the process directly moves to step S60.

At step S60, the objective function setting unit 13 determines whether the planning of this time is not the planning at the time of launching an assembly line but reconfiguration. When the determination at step S60 is YES, the process moves to step S62, the objective function setting unit 13 adds the objective function (2) to the list, and then the process moves to step S64. On the other hand, when the determination at step S60 is NO, the process directly moves to step S64.

At step S64, the objective function setting unit 13 determines whether a robot is to be used in the assembly line. When the determination at step S64 is NO, the process of FIG. 13 ends. On the other hand, when the determination at step S64 is YES, the process moves to step S66, and the objective function setting unit 13 adds the objective function (3) to the list.

Then, at step S68, the objective function setting unit 13 determines whether there is a job for which a robot is not yet developed. When the determination at step S68 is YES, the process of FIG. 13 ends. On the other hand, when the determination at step S68 is YES, the process moves to step S70, and the objective function setting unit 13 adds the objective function (4) to the list. Then, the entire process of FIG. 13 ends.

The objective function setting unit 13 transmits the list obtained through the process of FIG. 13 to the objective function calculation unit 14.

Process for Calculating the Objective Function to be Calculated (S20)

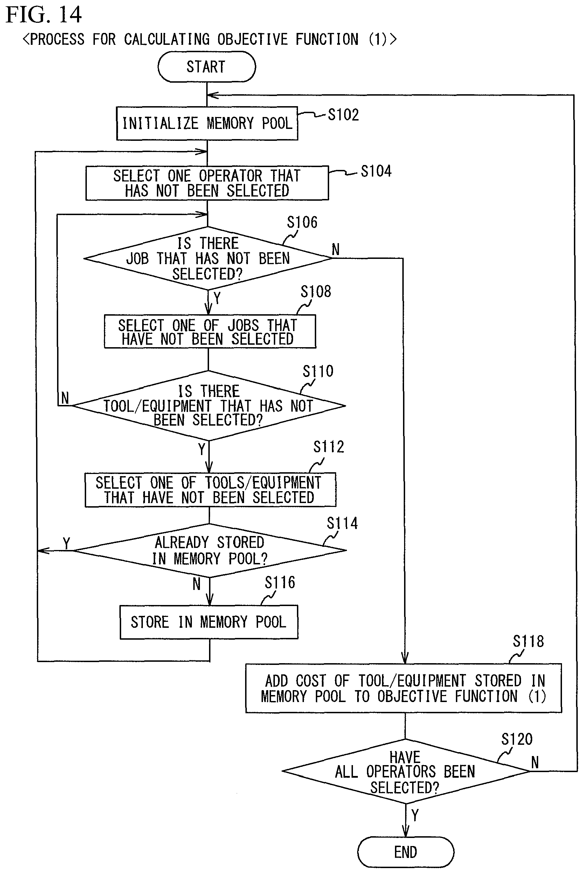

A detailed description will next be given of the process of calculating the objective function to be calculated. The objective function calculation unit 14 refers to the list created by the objective function setting unit 13, and executes a process of calculating the objective functions on the list (at least one of the processes of FIG. 14 through FIG. 19). Hereinafter, a description will be given of a process of calculating each objective function based on FIG. 14 through FIG. 19.

Process for Calculating the Objective Function (1)

FIG. 14 is a flowchart of a process for calculating the objective function (1). In the process of FIG. 14, at step S102, the objective function calculation unit 14 initializes a memory pool. The memory pool is a storage area for storing information about the tools and equipment used to calculate the objective function.

Then, at step S104, the objective function calculation unit 14 selects one operator (a person or robot) that has not been selected. Then, at step S106, the objective function calculation unit 14 determines whether there is a job that has not been selected among the jobs assigned to the selected person or robot. When the determination at step S106 is NO, the process moves to step S118 while the process moves to step S108 when the determination is NO. At step S108, the objective function calculation unit 14 selects one of the jobs that have not been selected.

Then, at step S110, the objective function calculation unit 14 determines whether there is a tool/equipment that has not been selected among the tools/equipment associated with the selected job in the job DB 2. When the determination at step S110 is NO, the process moves to step S106. On the other hand, when the determination at step S110 is YES, the process moves to step S 112.

At step S112, the objective function calculation unit 14 selects one of the tools/equipment that have not been selected among the tools/equipment associated with the selected job.

Then, at step S114, the objective function calculation unit 14 determines whether the selected tool/equipment is already stored in the memory pool. When the determination at step S 114 is NO, the process moves to step S 116, the tool/equipment selected by the objective function calculation unit 14 is stored in the memory pool, and the process returns to step S104. On the other hand, when the determination at step S 114 is YES, the process returns to step S104 without step S116. At step S104, the objective function calculation unit 14 repeatedly executes the processes of steps S104 through S 116.

When the determination at step S106 becomes NO while steps S104 through S 116 are repeated, the process moves to step S118, and the objective function calculation unit 14 specifies the numbers $n_i$ of individual tools and equipment i = 1, 2, ..., N, which are stored in the memory pool, required in the assembly line as a whole, and calculates the costs $a_i$ per day based on the individual depreciation of the tools and equipment. The objective function calculation unit 14 then multiplies $n_i$ by $a_i$ and adds the calculated value to the objective function $E_1$ (the above equation (1)). Then, the process moves to step S120, and the objective function calculation unit 14 determines whether all operators have been selected. When the determination at step S120 is NO, the process returns to step S102 while the entire process of FIG. 14 ends when the determination is YES.

Process for Calculating the Objective Function (2)

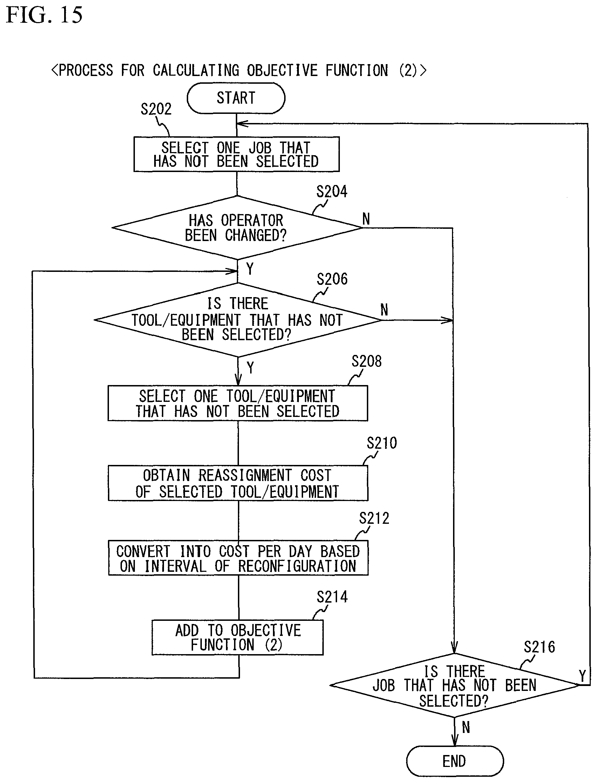

A description will be given of a method of calculating the objective function (2) along the flowchart of FIG. 15. In the process of FIG. 15, at step S202, the objective function calculation unit 14 selects, from the jobs assigned to the workers in the neighborhood solution reconfigured as illustrated in FIG. 8B, one job that has not been selected.

Then, at step S204, the objective function calculation unit 14 determines whether the operator of the selected job has been changed. That is, it is determined whether the operator of the selected job is different between FIG. 8A and FIG. 8B. When the determination at step S204 is NO, the process moves to step S216 while the process moves to step S206 when the determination is YES.

At step S206, the objective function calculation unit 14 refers to the job DB 2 to determine whether there is a tool/equipment that has not been selected. When the determination at step S206 is NO, the process moves to step S216 while the process moves to step S208 when the determination is YES.

At step S208, the objective function calculation unit 14 selects, from the tools/equipment associated with the selected job, one tool/equipment that has not been selected in the job DB 2. Then, at step S210, the objective function calculation unit 14 obtains from the tool/equipment/robot DB 3 (FIG. 4B) the reassignment cost of the selected tool/equipment. Then, at step S212, the objective function calculation unit 14 converts the obtained reassignment cost to the cost $b_i$ per day based on the interval of reconfiguration. The interval of reconfiguration means the time elapsed after the job planning (or reconfiguration) was conducted last time. However, this does not intend to suggest any limitation. When a plurality of intervals from the job planning to the next job planning are obtained, the average, the maximum value, or the minimum value of the obtained intervals may be employed as the interval of reconfiguration. When the reconfiguration is conducted for the first time, the operating time of the assembly line may be used, the interval of reconfiguration of other system may be used as a reference, or the administrator may manually input the interval of reconfiguration. Then, at step S214, the objective function calculation unit 14 adds the converted cost $b_i$ per day to the objective function $E_2$ (see the above equation (2)). Then, the process returns to step S206, and the processes of steps S206 through S214 are repeatedly executed until the determination of step S206 becomes NO.

[0079] When the determination at step S204 or S206 becomes NO, the process moves to step S216, and the objective function calculation unit 14 determines whether there is a job that has not been selected. When the determination at step S216 is YES, the process returns to step S202, and the same processes described above are executed. On the other hand, when the determination at step S216 is NO, that is, when there is no job that has not been selected, the entire process of FIG. 15 ends.

Process for Calculating the Objective Function (3)

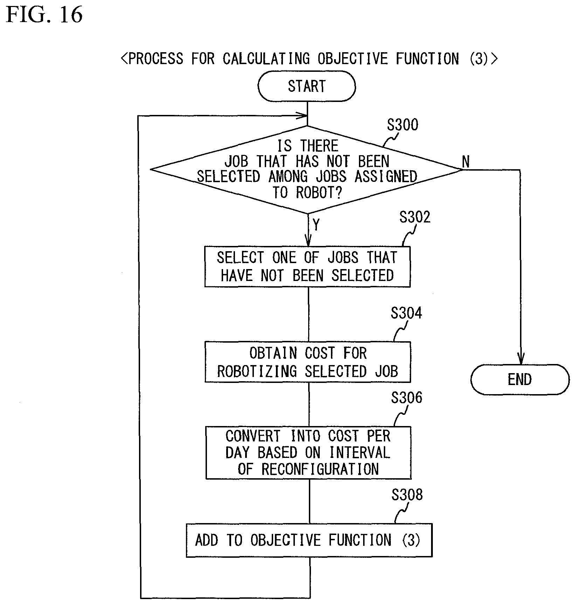

A description will next be given of a method of calculating the objective function (3) along the flowchart of FIG. 16. In the process of FIG. 16, at step S300, the objective function calculation unit 14 determines whether there is a job that has not been selected among the jobs assigned to a robot (for example, the jobs assigned to the robot that is first in the order of operators in FIG. 9). When the determination at step S300 is YES, the process moves to step S302, and the objective function calculation unit 14 selects one of the jobs that have not been selected.

Then, at step S304, the objective function calculation unit 14 obtains the cost of robotizing the selected job. More specifically, the value stored in the "cost of developing robotization" field associated with the selected job is obtained from the job DB 2 illustrated in FIG. 4A.

Then, at step S306, the objective function calculation unit 14 converts the cost of developing robotization into the cost $c_j$ per day based on the interval of reconfiguration.

Then, at step S308, the objective function calculation unit 14 adds the cost $c_j$ per day to the objective function $E_3$ (see the above equation (3)). Then, the process returns to step S300. The processes of steps S300 through S308 are repeated, and when the determination at step S300 becomes NO, the process of FIG. 16 ends. Process for Calculating the Objective Function (4)

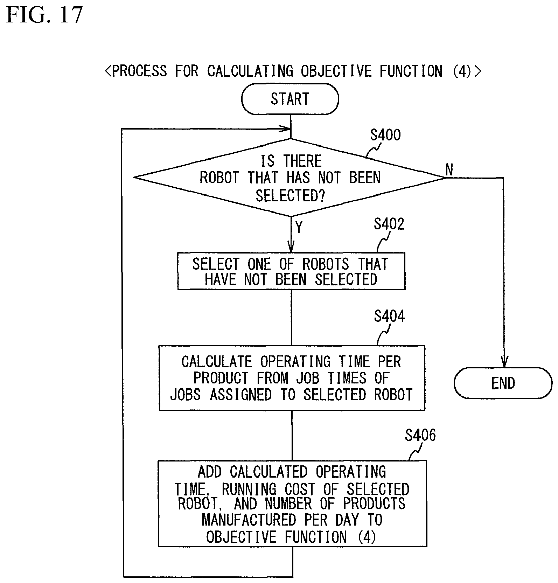

A description will next be given of a method of calculating the objective function (4) along the flowchart of FIG. 17. In the process of FIG. 17, at step S400, the objective function calculation unit 14 determines whether there is a robot that has not been selected. When the determination at step S400 is YES, the process moves to step S402, and the objective function calculation unit 14 selects one of the robots that have not been selected.

Then, at step S404, the objective function calculation unit 14 calculates the operating time of the selected robot per product (see FIG. 10) from the job times of the jobs assigned to the selected robot.

Then, at step S406, the objective function calculation unit 14 adds the value calculated by multiplying the product of the calculated operating time of the robot per product and the running cost of the selected robot by the number of products manufactured per day to the objective function (objective function $E_4$). Then, the process returns to step S400. Then, the objective function calculation unit 14 repeats the processes of steps S400 through S406, and when the determination at step S400 becomes NO, the process of FIG. 17 ends.

Process for Calculating the Objective Function (5)

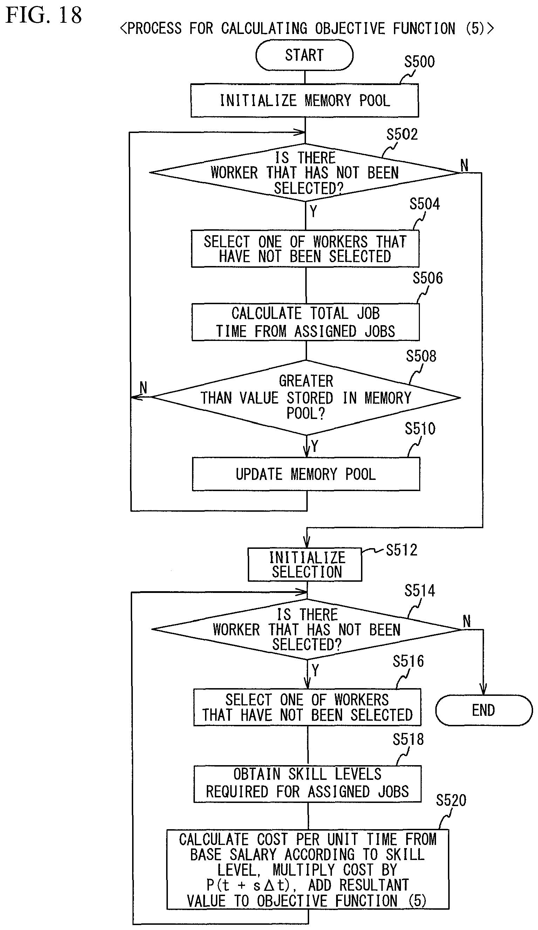

A description will next be given of a method of calculating the objective function (5) along the flowchart of FIG. 18. In the process of FIG. 18, at step S500, the objective function calculation unit 14 initializes a memory pool. This memory pool is a storage area that stores the longest total job time among total job times of individual workers.

Then, at step S502, the objective function calculation unit 14 determines whether there is a worker who has not been selected. When the determination at step S502 is NO, the process moves to step S512 while the process moves to step S504 when the determination is YES.

At step S504, the objective function calculation unit 14 selects one of the workers that have not been selected. Then, at step S506, the objective function calculation unit 14 calculates the total job time based on the jobs assigned to the selected worker.

At step S508, the objective function calculation unit 14 determines whether the calculated total job time is greater than the value stored in the memory pool. When the determination at step S508 is NO, the process returns to step S502. On the other hand, when the determination at step S508 is YES, the process moves to step S510, and the objective function calculation unit 14 updates the memory pool by the total job time obtained at step S506. After step S510, the process returns to step S502. Then, steps S502 through S510 are repeatedly executed as described above, and when the determination at step S502 becomes NO, the process moves to step S512.

Since the longest cycle time is obtained through the processes of steps S502 through S510, the previously described excess time $\Delta t$ is calculated by subtracting the takt time from the longest cycle time.

At step S512, the objective function calculation unit 14 initializes the selection. That is, the workers that have been selected are initialized to workers that have not been selected. Then, at step S514, the objective function calculation unit 14 determines whether there is a worker that has not been selected. When the determination at step S514 is YES, the process moves to step S516, and the objective function calculation unit 14 selects one of the workers that have not been selected.

Then, at step S518, the objective function calculation unit 14 refers to the job DB 2 to obtain the skill level required for the assigned job. Then, at step S520, the objective function calculation unit 14 obtains from the labor cost DB 4 the base salary according to the obtained skill level, calculates the cost $e_l$ per unit time from the obtained base salary, multiplies the cost $e_i$ by $P(t + s\Delta t)$, and adds the resultant value to the objective function $E_5$ (the above equation (5)).

After step S520, the process moves to step S514. Then, the objective function calculation unit 14 repeats the processes of steps S514 through S520, and when the determination at step S514 becomes NO, the entire process of FIG. 18 is ended.

Method of Calculating the Objective Function (6)

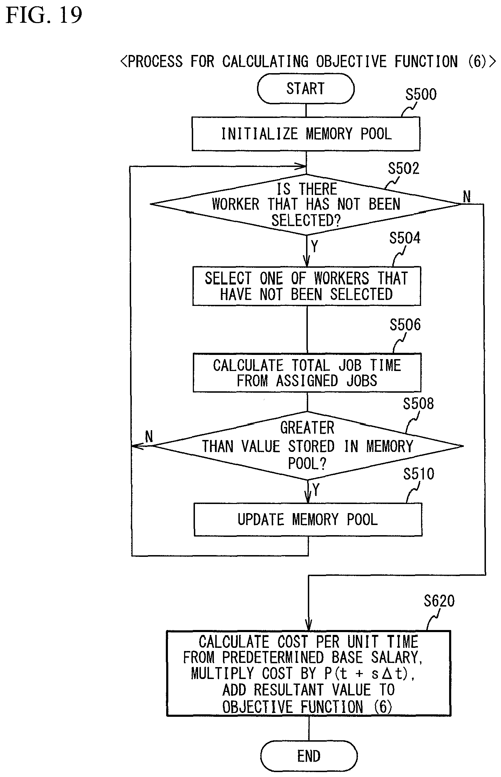

FIG. 19 is a flowchart of a method of calculating the objective function (6). As clear from the comparison between FIG. 19 and FIG. 18, in the process of FIG. 19, step S620 is executed instead of steps S512 through S520 of FIG. 18. It is assumed that the longest cycle time and $\Delta t$ have been calculated through the processes of steps S500 through S510 prior to the execution of the process of step S620.

At step S620, the objective function calculation unit 14 calculates the objective function (6) by specifying a certain amount of money with no individual difference as a base salary, calculating the cost $e_c$ per unit time from the base salary, and multiplying the cost $e_c$ by the number L of workers and $P(t + s\Delta t)$. The certain amount of money may be the average salary of the workers or other amounts.

Other processes are the same as those of FIG. 18.

As described above, the objective functions calculated by the objective function calculation unit 14 are transmitted to the search unit 15. Then, the search unit 15 searches the neighborhood solution of which the sum of the calculated objective functions is minimal and determines the neighborhood solution of which the sum is minimal as the best job plan.

As described above in detail, in the first embodiment, the neighborhood solution generation unit 12 assigns workers to the assembly line 20, assigns jobs and requisite tools and equipment to the workers, and generates neighborhood solutions. The objective function calculation unit 14 calculates the depreciation (the objective function $E_1$) per day in the whole of the assembly line based on the depreciation of the tools and equipment with respect to each neighborhood solution, calculates the overtime hours ($P \times \Delta t$) of each worker from the takt time of the assembly line 20 and the individual cycle times of the workers working in the assembly line 20, and calculates the labor cost of the assembly line per day (the objective function $E_6$ or $E_5$) based on the calculated overtime hours. The search unit 15 calculates the sum of the costs calculated by the objective function calculation unit 14 with respect to each neighborhood solution, and determines workers, tools, and equipment to be actually assigned to the assembly line based on the sum. This configuration allows the first embodiment to eliminate the need to set individual weights of the objective functions at the time of summing the objective functions because the first embodiment calculates objective functions of which the unit are adjusted to "yen/day" as the objective functions and uses the neighborhood solution of which the sum of the calculated objective functions is minimal as the job planning result. Therefore, since the weights do not need to be set manually, the appropriate job planning result is easily obtained with less labor.

In addition, in the first embodiment, when a robot is assigned to the assembly line 20 in the neighborhood solution, the objective function calculation unit 14 calculates the running cost of the robot per day (the objective function $E_4$) based on the operating time of the robot, and the search unit 15 conducts the job planning taking into consideration the calculation results. This configuration enables to obtain the job planning result capable of minimizing the operating time of the robot.

Additionally, in the first embodiment, when the job planning is reconfiguration, the objective function calculation unit 14 calculates the reassignment cost per day (the objective function $E_2$) based on the reassignment cost resulting from the change of the assignment of the worker, the tool, and the equipment, and the search unit 15 conducts the job planning taking into consideration the calculation results. This configuration enables to obtain the job planning result capable of minimizing the number of reassignments at the time of reconfiguration.

Additionally, in the first embodiment, when a job that is impossible to execute by a robot is assigned to a robot in the neighborhood solution, the objective function calculation unit 14 calculates a cost per day (the objective function $E_3$) based on the cost required for robotization, and the search unit 15 executes the job planning taking into consideration the calculation results. This configuration enables to obtain the job planning result that takes into consideration the degree of ease of robotization in the assembly line.

Additionally, in the first embodiment, when calculating the labor cost of the assembly line per day, the objective function calculation unit 14 calculates the labor cost ($E_5$) of the assembly line per day based on individual wages of the workers per day, and the search unit 15 conducts the job planning taking into consideration the calculation results. This configuration enables to obtain the job planning result capable of minimizing the number of highly skilled persons assigned to the assembly line.

The above first embodiment prepares six objective functions as objective functions, but does not intend to suggest any limitation, and may add other objective function of which the unit is "yen/day". At least one of the six objective functions may be omitted.

The above first embodiment describes a case where a cost per day is calculated as each objective function, but does not intend to suggest any limitation, and may calculate a cost per predetermined period of time such as hour, week, or month.

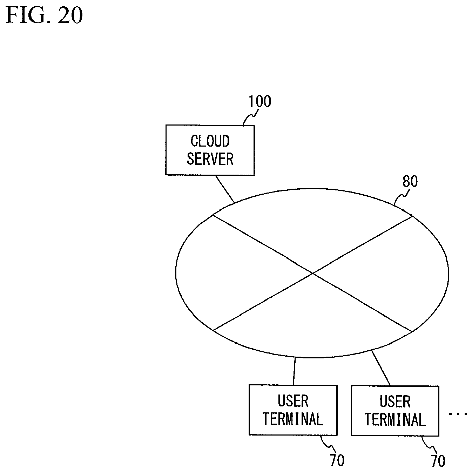

The above first embodiment describes a case where the job planning device 10 has the functions of FIG. 2, but does not intend to suggest any limitation. For example, a cloud server 100, illustrated in FIG. 20, connected to a network 80 such as the Internet may have the functions of FIG. 2. In this case, the cloud server 100 receives the planning condition and the like input from a user terminal 70, and executes the processes of FIG. 12 through FIG. 19 to create a job plan. The cloud server 100 transmits the job plan to the user terminal 70, and the received job plan is used in the user terminal 70. The cloud server 100 may be installed in either of a domestic location or an overseas location.

Second Embodiment

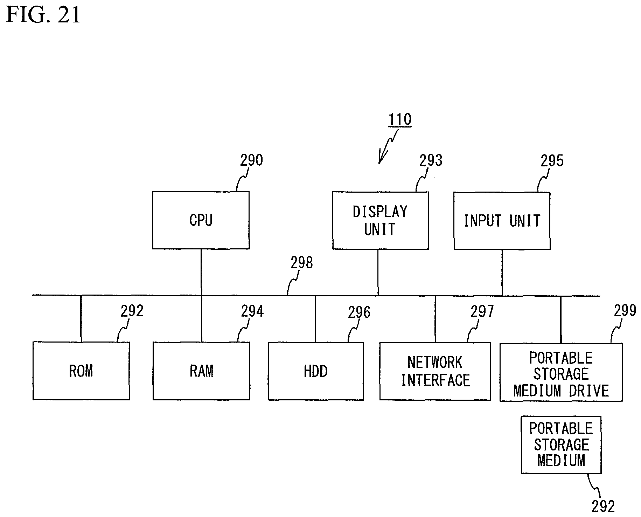

Hereinafter, a second embodiment of the job planning device will be described in detail with reference to FIG. 21 through FIG. 29.

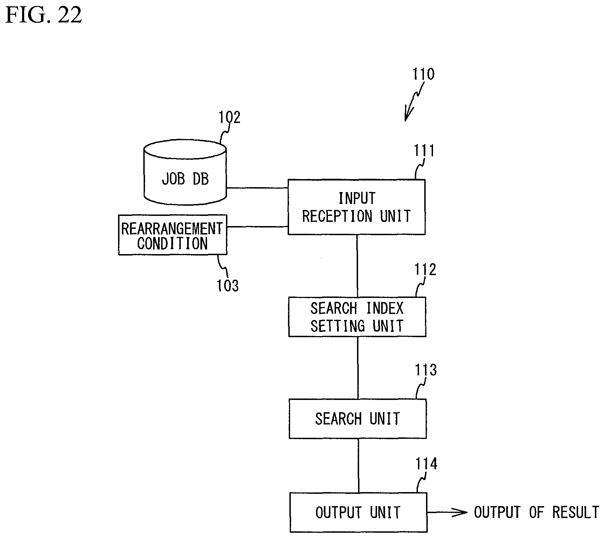

FIG. 21 illustrates a hardware configuration of a job planning device 110 in accordance with the second embodiment. The job planning device 110 of the second embodiment is an information processing device such as, for example a personal computer (PC), and includes, as illustrated in FIG. 21, a CPU 290, a ROM 292, a RAM 294, a storage unit (here, an HDD) 296, a network interface 297, a portable storage medium drive 299, a display unit 293, and an input unit 295. The display unit 293 includes a liquid crystal display or the like, and the input unit 295 includes a keyboard and a mouse, a touch panel, or the like. These components of the job planning device 110 are coupled to a bus 298. In the job planning device 110, the functions of each unit illustrated in FIG. 22 are implemented by the execution of programs (including a job planning program) stored in the ROM 292 or the HDD 296 or programs (including the job planning program) read from a portable storage medium 291 by the portable storage medium drive 299 by the CPU 290. FIG. 22 also illustrates a job database (DB) 102 stored in the HDD 296 or the like of the job planning device 110. Examples of the portable storage medium 291 include a portable storage medium such as a CD-ROM, a DVD disc, and a USB memory, and a semiconductor memory such as a flash memory.

FIG. 22 is a functional block diagram of the job planning device 110. The execution of the program by the CPU 290 implements an input reception unit 111, a search index setting unit 112 as a calculation unit, a search unit 113, and an output unit 114 in the job planning device 110 as illustrated in FIG. 22.

The job planning device 110 is a device that executes rearrangement for reassigning jobs to stations based on the job DB 102 and input data such as a rearrangement condition 103 and then outputs the result of the job rearrangement when the reconfiguration of an assembly line becomes necessary because of production fluctuation or resource fluctuation.

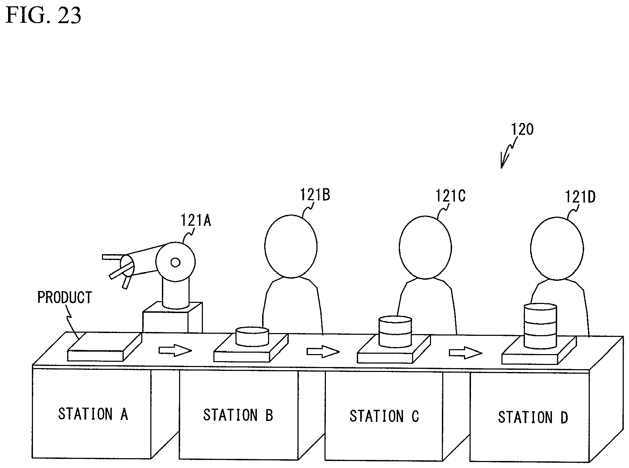

FIG. 23 is a diagram for describing an assembly line. As illustrated in FIG. 23, an assembly line 120 for assembling products has, for example, four stations: a station A through a station D.

In the assembly line 120, products are conveyed from the station to the station by a belt conveyor (not illustrated) or the like. A robot 121A and workers 121B through 121D are assigned to the stations of the assembly line 120. In the example of FIG. 23, the robot 121A is assigned to the station A, and the workers 121B through 121D are respectively assigned to the station B through the station D. The robot 121 A and the workers 121 B through 121 D respectively assigned to the station A through the station D execute jobs, which are assigned through the job planning or the job rearrangement, to products conveyed in the assembly line 120 to produce the products.

The configuration example of the assembly line 120 is not limited to the configuration illustrated in FIG. 23. For example, the assembly line 120 may have four or more stations. The robot 121A may be assigned to the station other than the station A, and the number of robots may be two or more.

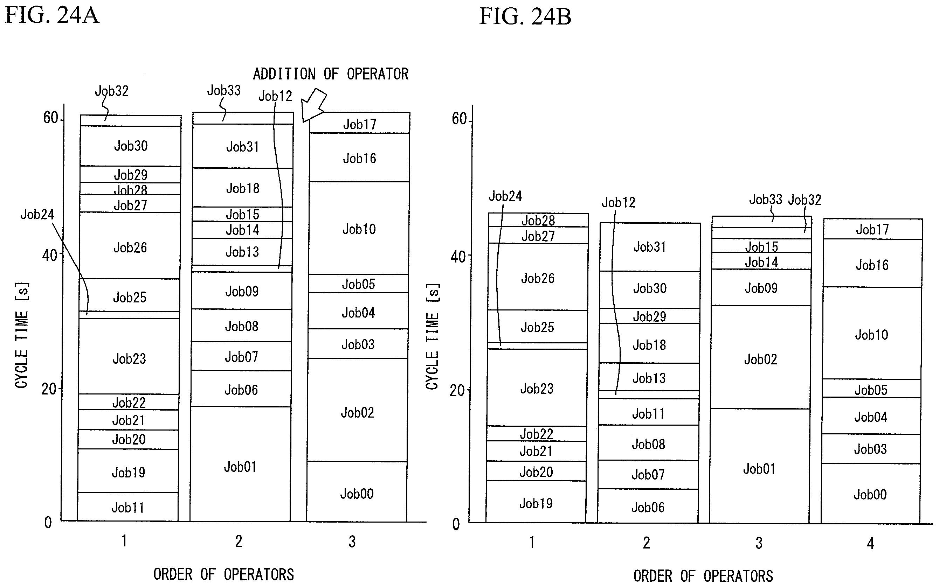

FIG. 24A and FIG. 24B are diagrams for describing the rearrangement of jobs in the assembly line 120. FIG. 24A illustrates a job assignment plan before the rearrangement, and FIG. 24B illustrate a job assignment plan after the rearrangement. In the example of FIG. 24A and FIG. 24B, the number of operators (persons and robots) is three before the rearrangement while one operator is added and the additional operator is located in the third in the order of operators after the rearrangement. In the second embodiment, jobs are assigned so that the total job time of jobs assigned to each operator is approximately the same as illustrated in FIG. 24A and FIG. 24B. Additionally, in the second embodiment, jobs are assigned to individual operators so that the order of jobs assigned to individual operators does not contradict with the order of operators. Furthermore, in the second embodiment, jobs are assigned so that the change of the operator to which each job is assigned is minimized, i.e., the addition of a new job to the worker or robot existing before the rearrangement is minimized.

FIG. 24A and FIG. 24B illustrate the addition of an operator, but a case where an operator is deleted is included in the rearrangement process described in the second embodiment. Also in the case of production fluctuation (increase or decrease in the number of jobs), the takt time increases or decreases, resulting in the increase or decrease in the number of operators. Thus, such a case is also included in the rearrangement process described in the second embodiment.

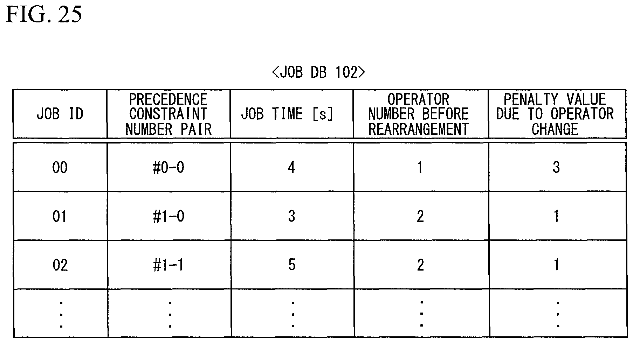

Referring back to FIG. 22, the input reception unit 111 receives the input of the rearrangement condition 103 by the operation input of a user. The input reception unit 111 refers to the job DB 102 that stores various information about jobs to be assigned in the job planning. The job DB 102 has a data structure illustrated in FIG. 25. More specifically, the job DB 102 includes, as illustrated in FIG. 25, "job ID", "precedence constraint number pair", "job time [s]", "operator number before rearrangement", and "penalty value due to operator change" fields. The "job ID" field stores identification number of the job (two-digit number subsequent to "Job" in FIG. 24A and FIG. 24B). The "precedence constraint number pair" field stores a number pair indicating the parent-child relation of the job. The precedence constraint number pair enables to understand which job is to be done next to which job. The details of the precedence constraint number pair will be described in detail later. The "job time [s]" field stores the amount of time (second) it takes to complete the job.

The "operator number before reconfiguration" field stores the number of the operator to which the job was assigned before rearrangement. The "penalty value due to operator change" field stores a penalty value when the operator of the job is changed. The larger penalty value means that the job requires more expertness and takes more labor or time for re-education or reteaching if the operator is changed.

Here, the precedence constraint number pair of the job DB 102 will be described in detail. The precedence constraint number pair is a number pair representing the order constraint indicating the constraint condition for the order of jobs until a product is assembled into a finished product. More specifically, the order constraint is information capable of expressing the order relation of nodes representing individual jobs up to a finished product by a directed acyclic graph.

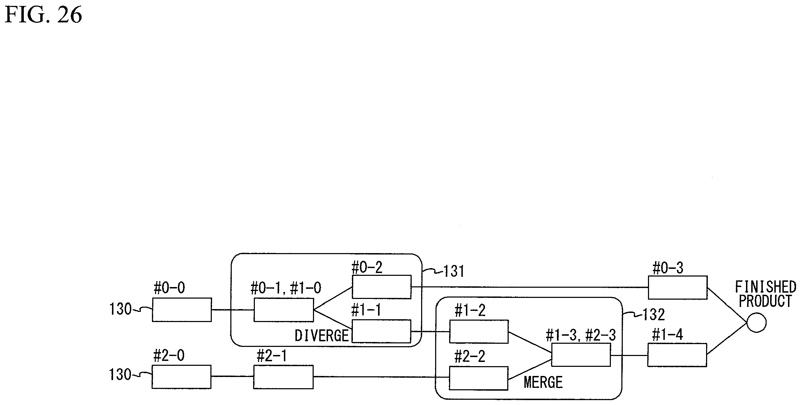

FIG. 26 is a diagram for describing the order of jobs in the assembly line 120. In FIG. 26, a node 130 represents a job. When there is an anteroposterior relation between two nodes 130, drawn is an arrow originating at the job to be done first (parent node) and terminating at the job to be done next (child node). As illustrated in FIG. 26, the order relation of the nodes 130 up to a finished product (the order of jobs) is expressed by a directed acyclic graph.

To express the order relation, in the job DB 102, based on the order constraint, a number "#[family number] - [generation number]" is given to the job (the node 130). More specifically, when the number of the parent node is #i - j, the number #i - (j + 1) is given to the child node. In a diverging part 131 including a plurality of child nodes, a new family number "k" is given to subsequent child nodes instead of "i", and #k - 0 is newly given to the parent node, and #k - 1 is newly given to the child node.

In a merging part 132 including a plurality of parent nodes, a plurality of numbers are given from the parent nodes to the child node, but the next child node does not necessarily take over all the numbers. That is, the smallest number of the family numbers (the oldest number in the number-giving order) is given to the child node next to the merging part 132.

The job planning device 110 is able to evaluate the presence or absence of violations of the precedence constraint by "adding a penalty when the older generation (parent) is assigned to a station posterior to the station to which the younger generation (child) is assigned in the same family" by using the number given to the job (the node 130).

Referring back to FIG. 22, the rearrangement condition 103 includes various conditions for rearranging jobs, and is set by the operation input through the input unit 295 by the user. For example, the rearrangement condition 103 includes "weights of penalty values", a "norm to be used", an "algorithm used for initial assignment", a "search algorithm to be used", and a "search stopping condition". Here, in the second embodiment, there are three kinds of penalty values calculated by the search index setting unit 112. Thus, the user sets weights to set which penalty value is emphasized among the penalty values. These weights are the "weights of penalty values" included in the rearrangement condition 103. In the second embodiment, the search index setting unit 112 calculates a norm between individual cycle times of the operators and the average of the cycle times of all the operators when calculating the variation in total job time (cycle time) among the operators. Thus, the user sets which one of the residual sum of squares (L2 norm) and the sum of the absolute values of differences (L1 norm) is to be used. This norm is the "norm to be used" included in the rearrangement condition 103. In the second embodiment, the user selects from, for example, the first fit method, the strongest fit method, and the like an algorithm used for initial assignment of jobs to stations. In addition, the user selects from, for example, the hill climbing method, the tabu search, simulated annealing, and the like a search algorithm used to obtain the combination of jobs assigned to each station. These selected algorithms are the "algorithm used for initial assignment" and the "search algorithm to be used" included in the rearrangement condition 103. Furthermore, the user sets an allowable penalty value and a maximum search time as conditions for stopping the search of the combination of jobs assigned to each station. This stopping condition is the "search stopping condition" included in the rearrangement condition 103.

The search index setting unit 112 calculates an evaluation value used to solve a combination optimization problem for obtaining the combination of jobs reassigned to each station based on the rearrangement condition 103 and the job information of the job DB 102. More specifically, the search index setting unit 112 calculates an evaluation value (penalty value) used to evaluate the presence or absence of violations of the precedence constraint by using the numbers given to jobs J1 and J2 (the nodes 130). The search index setting unit 112 also calculates another evaluation value (penalty value) indicating the difference between the cycle time in each station (A through D) and the average of the cycle times. The search index setting unit 112 further calculates still another evaluation value (penalty value) corresponding to the number of jobs each being assigned to an operator different from the operator to which the job was assigned before the rearrangement.

The search unit 113 solves the optimization problem under the condition that the sum of the values obtained by multiplying the evaluation values calculated by the search index setting unit 112 by respective weight coefficients is to be minimized to search a job plan including the combination of jobs assigned to each of the stations (A through D).

The output unit 114 outputs the job plan (the job rearrangement result) searched by the search unit 113 by file output or display output to a display.

Job Rearrangement Process by the Job Planning Device 110

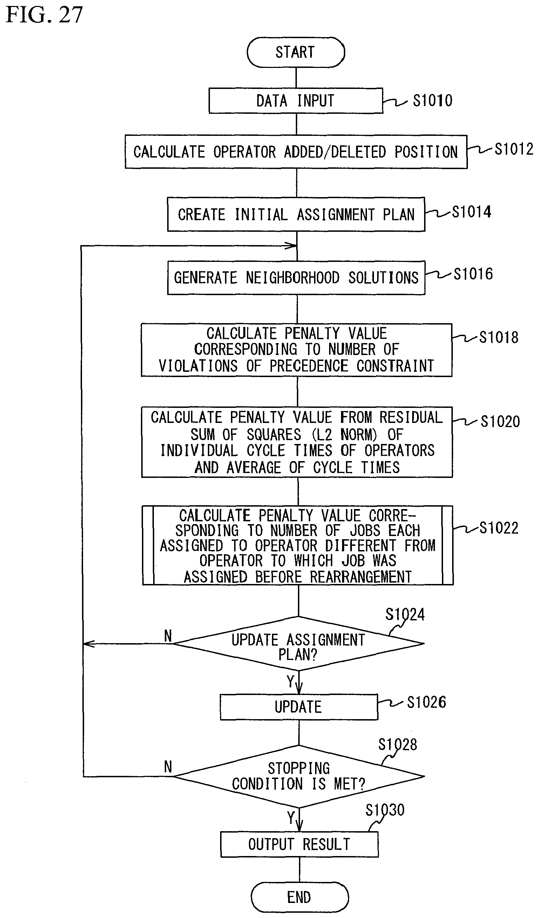

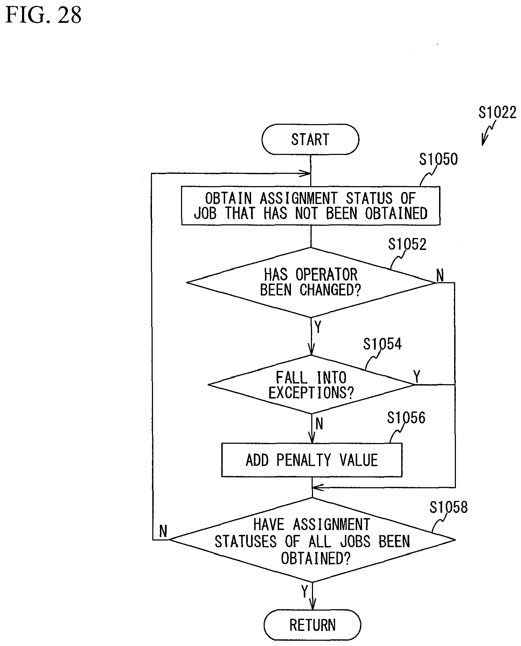

A description will be given of the job rearrangement process by the job planning device 110 of the second embodiment along flowcharts of FIG. 27 and FIG. 28 with reference to other drawings as necessary.

In the process of FIG. 27, at step S1010, the input reception unit 111 receives input of data such as the rearrangement condition 103 and the job DB 102.

Then, at step S1012, the search index setting unit 112 calculates a position to or from which an operator is added or deleted. More specifically, the search index setting unit 112 calculates where a new operator is to be added in the original order of operators, or which operator is to be deleted from the original order of operators. It is convenient to make the position to or from which an operator is added or deleted as equally spaced as possible to move the job to the added operator or move the job from the deleted operator. Thus, the position to or from which an operator is added or deleted is calculated as follows.

When the number of operators before rearrangement is represented by N, and the number of operators to be added or deleted is represented by d, an operator is added to the position that equally divides N into (d + 1) groups, or the operator is deleted from the position that equally divides N into (d + 1) groups. More specifically, in the case of the i-th addition, an operator is added to the position of iN/(d + 1) (when iN/(d + 1) is an integer, the position immediately after the position of iN/(d + 1)). In the case of the i-th deletion, the operator at the position of a value obtained by rounding up the digits after a decimal point of iN/(d + 1) is deleted.

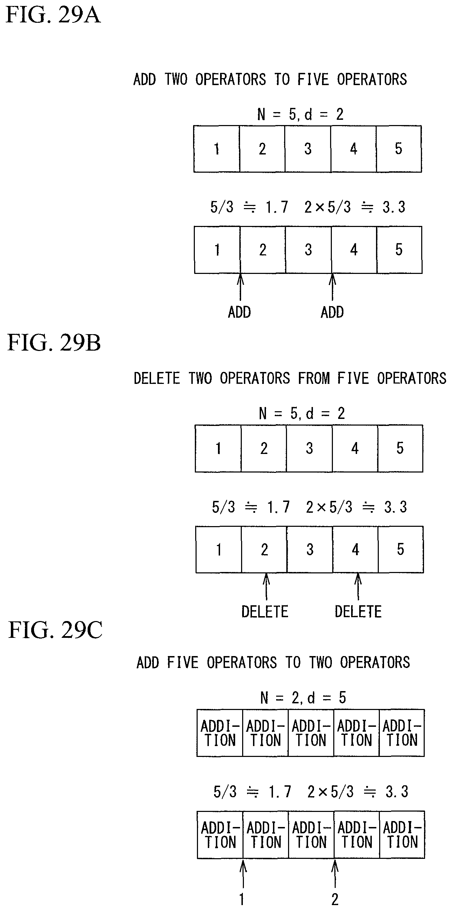

FIG. 29A illustrates a case where two operators are added when the number of operators is five, i.e., a case where operators are added under the condition of N = 5 and d = 2. In the example of FIG. 29A, since $1 \times 5/3 \approx 1.7$, the first additional operator is added between operators 1 and 2. Since $2 \times 5/3 \approx 3.3$, the second additional operator is added between operators 3 and 4.

On the other hand, FIG. 29B illustrates a case where two operators are deleted when the number of operators is five, i.e., a case where operators are deleted under the condition of N = 5 and d = 2. In the example of FIG. 29B, since $1 \times 5/3 \approx 1.7$, the first deleted operator is the operator 2. Since $2 \times 5/3 \approx 3.3$, the second deleted operator is the operator 4.

There is a case where the number of operators to be added is greater than the number of operators existing before addition (the case of N < d). In such a case, operators to be added are arranged in a row first, and then the i-th operator before addition is added to the position of id/(N + 1). FIG. 29C illustrates a case where the number of operators existing before addition is two and the number of operators to be added is five, i.e., the case of N = 2 and d = 5. In the example of FIG. 29C, operators to be added are arranged in a row first. Then, the first operator before addition is arranged between the first and the second from the front of the row of the operators to be added because id/(N + 1) = $1 \times 5/3 \approx$ 1.7. The second operator before addition is arranged between the third and the fourth from the front of the row of the operators to be added since id/(N + 1) = $2 \times 5/3 \approx 3.3$.

Referring back to FIG. 27, at step S1014, the search index setting unit 112 creates an initial assignment plan of jobs included in the rearrangement condition 103 to stations (operators). More specifically, the search index setting unit 112 creates the initial assignment plan by using a heuristic method such as, for example, the first fit method, the strongest fit method, or the like based on the algorithm used for initial assignment included in the rearrangement condition 103.

Then, at step S1016, the search index setting unit 112 generates neighborhood solutions from the assignment of jobs to the stations (the operators). More specifically, the search index setting unit 112 generates the neighborhood solutions by reversing two jobs in the assigned jobs or moving one job.

Then, the search index setting unit 112 calculates the evaluation values used to solve the combination optimization problem (S1018 through S1022).

More specifically, at step S1018, the search index setting unit 112 calculates the penalty value corresponding to the number of violations from the number of violations of the precedence constraint (for example, "a penalty is added when the older generation (parent) is assigned to a station posterior to the station to which the younger generation (child) is assigned in the same family").

Then, at step S1020, the search index setting unit 112 calculates the evaluation value (penalty value) from the residual sum of squares (L2 norm) of the individual total job times (cycle times) of the jobs assigned to the operators (121A through 121D) and the average of the cycle times.

The evaluation value of the cycle times of the operators (121A through 121D) and the average of the cycle times is assumed to be the L2 norm in the second embodiment, but may be the L1 norm (the sum of the absolute values of differences between the cycle times and the average of the cycle times) and is not limited.

Then, at step S1022, the search index setting unit 112 calculates the penalty value corresponding to the number of jobs each being assigned to an operator different from the operator to which the job was assigned before the rearrangement. More specifically, the search index setting unit 112 executes a process along the flowchart of FIG. 28.

In the process of FIG. 28, at step S1050, the search index setting unit 112 obtains one of assignment statuses of jobs (that have not been obtained). Then, at step S1052, the search index setting unit 112 determines whether an operator has been changed in the obtained assignment status. When the determination at step S1052 is NO, the process moves to step S1058 while the process moves to step S1054 when the determination is YES.

At step S1054, the search index setting unit 112 determines whether the change of the operator falls into exceptions. Here, the exceptions mean the assignment of a job to an operator to be added when an operator is added and the assignment of the job of a deleted operator to another operator when an operator is deleted. When falling into the exceptions, the change of the operator is excluded from the penalty. When the determination at step S1054 is YES, that is, when the change of the operator falls into the exceptions, the process moves to step S1058. On the other hand, when the determination at step S1054 is NO, the process moves to step S1056.

At step S1056, the search index setting unit 112 adds the penalty value. In this case, the search index setting unit 112 refers to the job DB 102, and adds the value stored in the "penalty value due to operator change" field of the obtained job to the penalty value. Thereafter, the process moves to step S1058.

At step S1058, the search index setting unit 112 determines whether the assignment statuses of all the jobs have been obtained. When the determination at step S1058 is NO, the search index setting unit 112 returns to step S1050, and repeatedly executes the processes of steps S1050 through S1058. On the other hand, when the determination at step S1058 is YES, the entire process of FIG. 28 is ended, and the process moves to step S1024 of FIG. 27.

The above example describes a case where different penalty values are used depending on jobs, but does not intend to suggest any limitation. The penalty values may be different depending on which one of a person or a robot takes in charge of the job after the rearrangement. For example, when a new job is assigned to a robot, reteaching becomes necessary, and it takes more labor and time than reeducation of a person. Thus, a larger penalty value may be set when the operator after the rearrangement is a robot.

Then, at step S 1024, the search unit 113 determines whether to employ the neighborhood solution, i.e., whether to update the assignment plan of jobs according to the search algorithm included in the rearrangement condition 103 based on the evaluation values (penalty values) calculated by the search index setting unit 112.

For example, the search unit 113 employs the neighborhood solution when the sum of the penalty values calculated at steps S1018 through S1022 becomes less. This employment rule differs depending on the search algorithm such as the hill climbing method, the tabu search, or the annealing method, and there may be a case where the neighborhood solution may be employed even when the sum of penalty values becomes larger.

In the above description, the sum of the penalty values is used, but when handling the penalty values, weights (wi) may be introduced, and the overall penalty value (P) may be calculated by summing the products of the penalty values (Pi) and the weights (wi). The weights (wi) are included in the rearrangement condition 103 and are preliminarily set by the user.

$$ P \equiv \sum_i w_i P_i \qquad\qquad (7) $$

When handling the penalty value, the penalty (Pi) may be improved in order of priority. For example, to prioritize the job plan including the combinations meeting the order constraint, the penalty value is calculated from the combinations (neighborhood solutions) that improve the penalty value corresponding to the number of violations of the precedence constraint obtained at step S1018. Then, the combinations that improve the penalty value calculated at step S1020 or step S1022 may be obtained.

A method of handling the penalty value may be the combination of the above two methods. The way of combining the two methods may be included in the rearrangement condition 103 as the user specification.

When the determination at step S1024 is NO, that is, when the assignment plan of jobs is not updated, the process returns to step S1016 to generate a new neighborhood solution. When returning to step S1016 to start a search from a new neighborhood solution, the search unit 113 may search the combination by changing the assigned location of the robot 121 A assigned to a station on the assembly line 120 or changing the robot 121A to a person (a worker). In this case, the assignment plan of jobs under the broader conditions can be obtained.

When the determination at step S1024 is YES, i.e., when the assignment plan of jobs is updated, the process moves to step S1026, and the search unit 113 updates the assignment plan of jobs obtained through the preceding process by the assignment plan of the neighborhood solution.

As described above, the search unit 113 searches the combination of jobs assigned to each station by solving the combination optimization problem so as to level the cycle times in the robot 121A and the workers 121B through 121 D respectively assigned to the stations A through D. The search unit 113 searches a job plan including the combinations that meet the order constraint from combinations of jobs assigned to the stations based on the penalty value corresponding to the number of violations of the precedence constraint. In addition, the search unit 113 searches the combinations that reduce the number of jobs each being assigned, after rearrangement, to an operator different from the operator to which the job was assigned (the combinations that maintain the stations).

Then, the search unit 113 determines whether the condition for stopping the search included in the rearrangement condition 103 (the allowable penalty value, the maximum search time, and the like) is met at step S1028.

For example, when the penalty values calculated at steps S1018 through S1022 satisfy the respective allowable penalty values (are within the allowable ranges), the search unit 113 determines that the stopping condition is met. When the time elapsed from the start of the process of FIG. 27 exceeds the maximum search time, the search unit 113 determines that the sufficient search has been conducted and the stopping condition is met. As described above, when the stopping condition is met, the determination at step S1028 becomes YES, and the process moves to step S1030. On the other hand, when the stopping condition is not met, the process returns to step S1016.

When the stopping condition is met and the process moves to step S1030, the output unit 114 outputs the obtained assignment result of jobs (the reconfiguration result).

The execution of the processes of FIG. 27 and FIG. 28 enables to appropriately conduct the rearrangement of jobs.

As described in detail above, in the second embodiment, the input reception unit 111 receives the content of the change of operators (a person or robot) assigned to the stations on an assembly line, information about jobs to be assigned to the stations, and information about jobs that were assigned to the operators before rearrangement. The search index setting unit 112 calculates a penalty value from the number of jobs each being assigned to an operator different from the operator to which the job was assigned before the rearrangement when the input reception unit 111 assigns the jobs to operators based on the received information. The search unit 113 searches a job plan including the combination of jobs assigned to each operator by solving the optimization problem under the condition that a value calculated based on the calculated penalty values (for example, the sum of different penalty values) is to be minimized, and the output unit 114 outputs the search result. This configuration enables to create a job plan that minimizes the change of operators after rearrangement, thereby minimizing the re-education or reteaching necessary after the reconfiguration.

Additionally, in the second embodiment, the search index setting unit 112 does not use the job assigned to a newly added operator and the job that was assigned to the deleted operator for the calculation of the penalty value. Thus, the inevitable change of the operator is excluded from the calculation of the penalty value, thereby enabling to calculate an appropriate value as the penalty value.

Additionally, in the second embodiment, the search index setting unit 112 calculates the penalty value based on the number of contradictions that the order of jobs assigned to operators contradicts with the arrangement order of the operators, i.e., the number of violations of the precedence constraint. Accordingly, the job plan that minimizes violations of the precedence constraint and is in accordance with the order of jobs for assembling products is able to be created by conducting the rearrangement based on the calculated penalty value.

Additionally, in the second embodiment, the search index setting unit 112 calculates the penalty value based on the value relating to the variation in time required for the jobs assigned to the operator (cycle time), i.e., the norm between the cycle times and the average of the cycle times of all operators. Accordingly, the job plan in which the cycle times are leveled is created by conducting the rearrangement based on the calculated penalty value.

Additionally, in the second embodiment, the search unit 113 searches the job plan including the combination of jobs assigned to each operator by solving the optimization problem under the condition that the sum of the values calculated by multiplying the calculated penalty values by predetermined respective weights (see the above equation (7)) is to be minimized. Accordingly, the job plan is searched taking into consideration the degree of importance of each penalty value.

Additionally, in the second embodiment, the search unit 113 executes the search until the evaluation value becomes within the allowable range (the allowable penalty value) or the time spent for search exceeds the maximum search time. Accordingly, the search is ended when it is determined that the sufficient search has been conducted.

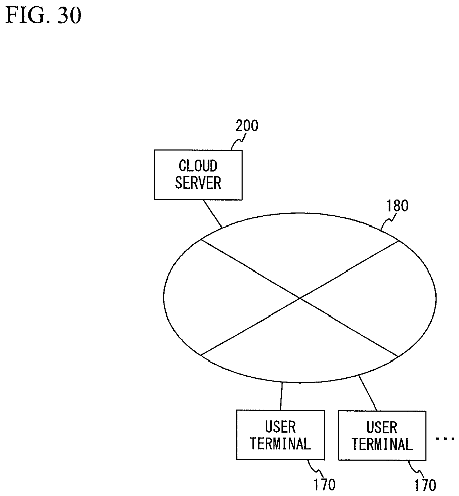

The above second embodiment describes a case where the job planning device 110 has the functions of FIG. 22, but does not intend to suggest any limitation. For example, a cloud server 200, illustrated in FIG. 30, connected to a network 180 such as the Internet may have the functions of FIG. 22. In this case, the cloud server 200 receives the rearrangement condition input from a user terminal 170, and creates a job plan by executing the processes of FIG. 27 and FIG. 28. The cloud server 200 transmits the job plan to the user terminal 170, and the received job plan is used in the user terminal 170. The cloud server 200 may be installed in either of a domestic location or an overseas location.

The above second embodiment describes a case where the "penalty value due to operator change" stored in the job DB 102 of FIG. 25 is used at step S1022, but does not intend to suggest any limitation, and the penalty values may be the same value among all the jobs.

The above second embodiment may present to the user the rearrangement results obtained by making the initial assignment different, and allow the user to select the appropriate rearrangement result. When the initial assignment differs, different rearrangement results are obtained because of the characteristics of the search algorithm. Thus, by presenting a plurality of rearrangement results, the user is able to consider matters that are not taken into consideration with the penalty values, and select a more appropriate rearrangement result.

The above-described processing functions are implemented by a computer. In this case, a program in which processing details of the functions that a processing device (CPU) is to have are written are provided. The execution of the program by the computer allows the computer to implement the above described processing functions. The program in which the processing details are written can be stored in a storage medium (however, excluding carrier waves) capable of being read by a computer.

When the program is distributed, it may be sold in the form of a portable storage medium such as a DVD (Digital Versatile Disc) or a CD-ROM (Compact Disc Read Only Memory) storing the program. The program may be stored in a storage device of a server computer, and the program may be transferred from the server computer to another computer over a network.

A computer executing the program stores the program stored in a portable storage medium or transferred from a server computer in its own storage device. The computer then reads the program from its own storage device, and executes a process according to the program. The computer may directly read the program from a portable storage medium, and execute a process according to the program. Alternatively, the computer may successively execute a process, every time the program is transferred from a server computer, according to the received program.

Although the exemplary embodiments of the present invention have been illustrated in detail, the present invention is not limited to the above-mentioned embodiments, and other embodiments, variations and modifications may be made without departing from the scope of the present invention.

STATEMENTS OF INVENTION

1. A job planning device (10) comprising:

an assignment unit (12) configured to assign workers to a production line (20) and assign a job, a tool required, and/or equipment required to each worker of the workers;
a calculation unit (14) configured to calculate depreciation per predetermined period of time in a whole of the production line based on depreciation of the tool and/or the equipment and a labor cost of the production line (20) per the predetermined period of time based on overtime hours of the each worker calculated from a takt time of the production line and individual cycle times of the workers working in the production line (20); and
a determination unit (15) configured to calculate a sum of costs calculated by the calculation unit with respect to each assignment plan created by the assignment unit, and determine workers, tools, and/or equipment to be actually assigned to the production line based on the sum.

2. The job planning device according to statement 1, wherein
the calculation unit (14) is configured to, when the assignment unit (12) assigns a robot to the production line (20), calculate a running cost of the robot per the predetermined period of time based on an operating time of the robot.
3. The job planning device according to statement 1 or 2, wherein
the calculation unit (14) is configured to, when the assignment unit (12) changes assignment of the worker, the tool, and/or the equipment by using an existing line as a reference, calculate a reassignment cost per the predetermined period of time based on a reassignment cost resulting from a change of the assignment of the worker, the tool, and/or the equipment.
4. The job planning device according to any one of statements 1 through 3, wherein
the calculation unit (14) is configured to, when the assignment unit (12) assigns a job that is impossible to execute by a robot to a robot, calculate a development cost and/or a teaching cost per the predetermined period of time based on a development cost and/or a teaching cost of the robot.
5. The job planning device according to any one of statements 1 through 4, wherein
the calculation unit (14) is configured to, when the calculation unit (14) calculates the labor cost of the production line per the predetermined period of time, obtain information about individual wages of the workers per the predetermined period of time and calculate the labor cost of the production line per the predetermined period of time based on the obtained information about the individual wages of the workers per the predetermined period of time.
6. A job planning method implemented by a computer, the job planning method comprising:

assigning workers to a production line (20) and assigning a job, a tool required, and/or equipment required to each worker of the workers (S 14);
calculating depreciation per predetermined period of time in a whole of the production line (20) based on depreciation of the tool and/or the equipment and a labor cost of the production line per the predetermined period of time based on overtime hours of the each worker calculated from a takt time of the production line and individual cycle times of the workers working in the production line (S20); and
calculating a sum of costs calculated in the calculating with respect to each assignment plan created in the assigning, and determining workers, tools, and/or equipment to be actually assigned to the production line based on the sum (S22).

7. The job planning method according to statement 6, wherein
the calculating (S20) includes, when a robot is assigned to the production line, calculating a running cost of the robot per the predetermined period of time based on an operating time of the robot (S400 through S406).

8. The job planning method according to statement 6 or 7, wherein
the calculating includes, when assignment of the worker, the tool, and/or the equipment is changed by using an existing line as a reference in the assigning, calculating a reassignment cost per the predetermined period of time based on a reassignment cost resulting from a change of the assignment of the worker, the tool, and/or the equipment (S202 through S216).

9. The job planning method according to any one of statements 6 through 8, wherein
the calculating includes, when a job that is impossible to execute by a robot is assigned to a robot, calculating a development cost and/or a teaching cost per the predetermined period of time based on a development cost and/or a teaching cost of the robot (S300 through S308).

10. The job planning method according to any one of statements 6 through 9, wherein
the calculating includes, when the labor cost of the production line per the predetermined period of time is calculated in the calculating, obtaining information about individual wages of the workers per the predetermined period of time, and calculating the labor cost of the production line per the predetermined period of time based on the obtained information about the individual wages of the workers per the predetermined period of time.

11. A job planning program that causes a computer to execute a process, the process comprising:

    assigning workers to a production line (20) and assigning a job, a tool required, and/or equipment required to each worker of the workers (S 14);
    calculating depreciation per predetermined period of time in a whole of the production line (20) based on depreciation of the tool and/or the equipment and a labor cost of the production line per the predetermined period of time based on overtime hours of the each worker calculated from a takt time of the production line and individual cycle times of the workers working in the production line (S20); and
    calculating a sum of costs calculated in the calculating with respect to each assignment plan created in the assigning, and determining workers, tools, and/or equipment to be actually assigned to the production line based on the sum (S22).

12. A job planning device (110) comprising:

    an input reception unit (111) configured to receive an input of rearrangement information and planning information, the rearrangement information including a content of a change of operators (21 A through 21 D), each being a person or robot, assigned to stations on an assembly line and information about jobs to be assigned to the stations, the planning information including information about jobs that have been assigned to each of the operators before rearrangement;
    a calculation unit (112) configured to calculate an evaluation value from a number of jobs each being assigned to a different operator from an operator to which the job has been assigned in the planning information based on the rearrangement information when the jobs are assigned to the operators based on the rearrangement information;
    a search unit (113) configured to search a job plan including a combination of jobs assigned to each of the operators by solving an optimization problem under a condition that the calculated evaluation value or a value based on the calculated evaluation value is to be minimized; and
    an output unit (114) configured to output the job plan searched by the search unit (113).

13. The job planning device according to statement 12, wherein
the calculation unit (112) is configured to exclude a job that is assigned to an operator newly added in the rearrangement information and a job that has been assigned to an operator deleted in the rearrangement information from the jobs each being assigned to the different operator.

14. The job planning device according to statement 12 or 13, wherein
the information about the jobs includes a constraint condition for an order of the jobs, and
the calculation unit is configured to calculate another evaluation value from a number of contradictions that an order of the jobs assigned to the operators contradicts with an arrangement order of the operators.

15. The job planning device according to any one of statements 12 through 14, wherein
the calculation unit is configured to calculate another evaluation value from a value relating to a variation in time required for the jobs assigned to the operators.

16. The job planning device according to statement 14 or 15, wherein
the search unit is configured to search the job plan including the combination of jobs assigned to each of the operators by solving an optimization problem under a condition that a sum of the calculated evaluation values is to be minimized.

17. The job planning device according to statement 14 or 15, wherein
the search unit is configured to search the job plan including the combination of jobs assigned to each of the operators by solving an optimization problem under a condition that a sum of values calculated by multiplying the calculated evaluation values by predetermined respective weight coefficients is to be minimized.

18. The job planning device according to any one of statements 12 through 17, wherein
the input reception unit is configured to receive an input of an allowable range of the evaluation value and a maximum search time, and
the search unit is configured to execute a search until the evaluation value becomes within the allowable range or time spent for the search exceeds the maximum search time.

19. The job planning device according to any one of statements 12 through 18,
the calculation unit is configured to create a plurality of initial assignment plans of assigning the jobs to the operators based on the rearrangement information,
the search unit is configured to search the job plan in a plurality based on the plurality of initial assignment plans, and
the output unit outputs the plurality of the job plans searched by the search unit.

20. The job planning device according to any one of statements 12 through 19, wherein
the calculation unit is configured to, when the input reception unit receives an input of a number of additional operators to be assigned to the stations or a number of operators to be deleted as the contents of the change of the operators assigned to the stations on the assembly line, determine a position that substantially equally divides the production line into the number of additional operators as a position to which an operator is to be added or determine an operator at a position that divides the production line into the number of operators to be deleted as an operator to be deleted from the production line.

21. A job planning method implemented by a computer, the job planning method comprising:

  receiving an input of rearrangement information and planning information, the rearrangement information including a content of a change of operators, each being a person or robot, assigned to stations on an assembly line and information about jobs to be assigned to the stations, the planning information including information about jobs that have been assigned to the operators before rearrangement (S10);
  calculating an evaluation value from a number of jobs each being assigned to a different operator from an operator to which the job has been assigned in the planning information when the jobs are assigned to the operators based on the rearrangement information (S22);
  searching a job plan including a combination of jobs assigned to each of the operators by solving an optimization problem under a condition that the calculated evaluation value or a value based on the calculated evaluation value is to be minimized (S16 through S26); and
  outputting the searched job plan (S30).

22. The job planning method according to statement 21, wherein
the calculating includes excluding a job that is assigned to an operator newly added in the rearrangement information and a job that has been assigned to an operator deleted in the rearrangement information from the jobs each being assigned to the different operator.

23. The job planning method according to statement 21 or 22, wherein
the information about the jobs includes a constraint condition for an order of the jobs, and
the calculating includes calculating another evaluation value from a number of contradictions that an order of the jobs assigned to the operators contradicts with an arrangement order of the operators.

24. The job planning method according to any one of statements 21 through 23, wherein
the calculating includes calculating another evaluation value from a value relating to a variation in time required for the jobs assigned to the operators.

25. The job planning method according to statement 23 or 24, wherein
the searching includes searching the job plan including the combination of the jobs assigned to each of the operators by solving an optimization problem under a condition that a sum of the calculated evaluation values is to be minimized.

26. The job planning method according to statement 23 or 24, wherein
the searching includes searching the job plan including the combination of the jobs assigned to each of the operators by solving an optimization problem under a condition that a sum of values calculated by multiplying the calculated evaluation values by predetermined respective weight coefficients is to be minimized.

27. The job planning method according to any one of statements 21 through 26, wherein
the receiving of the input includes receiving an input of an allowable range of the evaluation value and a maximum search time, and
the searching includes executing a search until the evaluation value becomes within the allowable range or time spent for the search exceeds the maximum search time.

28. A job planning program that causes a computer to execute a process, the process comprising:

receiving an input of rearrangement information and planning information, the rearrangement information including a content of a change of operators, each being a person or robot, assigned to stations on an assembly line and information about jobs to be assigned to the stations, the planning information including information about jobs that have been assigned to the operators before rearrangement (S10);
calculating an evaluation value from a number of jobs each being assigned to a different operator from an operator to which the job has been assigned in the planning information when the jobs are assigned to the operators based on the rearrangement information (S22);
searching a job plan including a combination of jobs assigned to each of the operators by solving an optimization problem under a condition that the calculated evaluation value or a value based on the calculated evaluation value is to be minimized (S16 through S26); and
outputting the searched job plan (S30).

## Claims

1. A job planning device (10) comprising:

an assignment unit (12) configured to assign workers to a production line (20) and assign a job, a tool required, and/or equipment required to each worker of the workers;
a calculation unit (14) configured to calculate depreciation per predetermined period of time in a whole of the production line based on depreciation of the tool and/or the equipment and a labor cost of the production line (20) per the predetermined period of time based on overtime hours of the each worker calculated from a takt time of the production line and individual cycle times of the workers working in the production line (20); and
a determination unit (15) configured to calculate a sum of costs calculated by the calculation unit with respect to each assignment plan created by the assignment unit, and determine workers, tools, and/or equipment to be actually assigned to the production line based on the sum.

2. The job planning device according to claim 1, wherein
the calculation unit (14) is configured to, when the assignment unit (12) assigns a robot to the production line (20), calculate a running cost of the robot per the predetermined period of time based on an operating time of the robot.

3. The job planning device according to claim 1 or 2, wherein
the calculation unit (14) is configured to, when the assignment unit (12) changes assignment of the worker, the tool, and/or the equipment by using an existing line as a reference, calculate a reassignment cost per the predetermined period of time based on a reassignment cost resulting from a change of the assignment of the worker, the tool, and/or the equipment.

4. The job planning device according to any one of claims 1 through 3, wherein
the calculation unit (14) is configured to, when the assignment unit (12) assigns a job that is impossible to execute by a robot to a robot, calculate a development cost and/or a teaching cost per the predetermined period of time based on a development cost and/or a teaching cost of the robot.

5. The job planning device according to any one of claims 1 through 4, wherein
the calculation unit (14) is configured to, when the calculation unit (14) calculates the labor cost of the production line per the predetermined period of time, obtain information about individual wages of the workers per the predetermined period of time and calculate the labor cost of the production line per the predetermined period of time based on the obtained information about the individual wages of the workers per the predetermined period of time.

6. A job planning method implemented by a computer, the job planning method comprising:

assigning workers to a production line (20) and assigning a job, a tool required, and/or equipment required to each worker of the workers (S 14);

calculating depreciation per predetermined period of time in a whole of the production line (20) based on depreciation of the tool and/or the equipment and a labor cost of the production line per the predetermined period of time based on overtime hours of the each worker calculated from a takt time of the production line and individual cycle times of the workers working in the production line (S20); and

calculating a sum of costs calculated in the calculating with respect to each assignment plan created in the assigning, and determining workers, tools, and/or equipment to be actually assigned to the production line based on the sum (S22).

7. A job planning device (110) comprising:

an input reception unit (111) configured to receive an input of rearrangement information and planning information, the rearrangement information including a content of a change of operators (21 A through 21D), each being a person or robot, assigned to stations on an assembly line and information about jobs to be assigned to the stations, the planning information including information about jobs that have been assigned to each of the operators before rearrangement;

a calculation unit (112) configured to calculate an evaluation value from a number of jobs each being assigned to a different operator from an operator to which the job has been assigned in the planning information based on the rearrangement information when the jobs are assigned to the operators based on the rearrangement information;

a search unit (113) configured to search a job plan including a combination of jobs assigned to each of the operators by solving an optimization problem under a condition that the calculated evaluation value or a value based on the calculated evaluation value is to be minimized; and

an output unit (114) configured to output the job plan searched by the search unit (113).

8. The job planning device according to claim 7, wherein
the calculation unit (112) is configured to exclude a job that is assigned to an operator newly added in the rearrangement information and a job that has been assigned to an operator deleted in the rearrangement information from the jobs each being assigned to the different operator.

9. The job planning device according to claim 7 or 8, wherein
the information about the jobs includes a constraint condition for an order of the jobs, and
the calculation unit is configured to calculate another evaluation value from a number of contradictions that an order of the jobs assigned to the operators contradicts with an arrangement order of the operators.

10. The job planning device according to any one of claims 7 through 9, wherein
the calculation unit is configured to calculate another evaluation value from a value relating to a variation in time required for the jobs assigned to the operators.

11. The job planning device according to claim 9 or 10, wherein
the search unit is configured to search the job plan including the combination of jobs assigned to each of the operators by solving an optimization problem under a condition that a sum of the calculated evaluation values is to be minimized.

12. The job planning device according to claim 9 or 10, wherein
the search unit is configured to search the job plan including the combination of jobs assigned to each of the operators by solving an optimization problem under a condition that a sum of values calculated by multiplying the calculated evaluation values by predetermined respective weight coefficients is to be minimized.

13. The job planning device according to any one of claims 7 through 12, wherein
the input reception unit is configured to receive an input of an allowable range of the evaluation value and a maximum search time, and
the search unit is configured to execute a search until the evaluation value becomes within the allowable range or time spent for the search exceeds the maximum search time.

14. The job planning device according to any one of claims 7 through 13, the calculation unit is configured to create a plurality of initial assignment plans of assigning the jobs to the operators based on the rearrangement information, the search unit is configured to search the job plan in a plurality based on the plurality of initial assignment plans, and

the output unit outputs the plurality of the job plans searched by the search unit.

15. The job planning device according to any one of claims 7 through 14, wherein
the calculation unit is configured to, when the input reception unit receives an input of a number of additional operators to be assigned to the stations or a number of operators to be deleted as the contents of the change of the operators assigned to the stations on the assembly line, determine a position that substantially equally divides the production line into the number of additional operators as a position to which an operator is to be added or determine an operator at a position that divides the production line into the number of operators to be deleted as an operator to be deleted from the production line.

16. A job planning method implemented by a computer, the job planning method comprising:

receiving an input of rearrangement information and planning information, the rearrangement information including a content of a change of operators, each being a person or robot, assigned to stations on an assembly line and information about jobs to be assigned to the stations, the planning information including information about jobs that have been assigned to the operators before rearrangement (S10);
calculating an evaluation value from a number of jobs each being assigned to a different operator from an operator to which the job has been assigned in the planning information when the jobs are assigned to the operators based on the rearrangement information (S22);
searching a job plan including a combination of jobs assigned to each of the operators by solving an optimization problem under a condition that the calculated evaluation value or a value based on the calculated evaluation value is to be minimized (S16 through S26); and
outputting the searched job plan (S30).

17. A job planning program which, when executed on a computer, causes the computer to execute a process, the process comprising a method according to any preceding method claim.

FIG. 1

FIG. 2

10

```
JOB DB                    ┌──────────────┐
   2                      │   INPUT      │  11
                          │ RECEPTION UNIT│
PLANNING                  └──────────────┘
CONDITION
   5                      ┌──────────────┐
                          │ NEIGHBORHOOD │  12
                          │  SOLUTION    │
                          │GENERATION UNIT│
                          └──────────────┘

                          ┌──────────────┐
TOOL/                     │OBJECTIVE FUNCTION│  13
EQUIPMENT/                │  SETTING UNIT │
ROBOT DB                  └──────────────┘
   3
                          ┌──────────────┐
LABOR                     │OBJECTIVE FUNCTION│  14
COST DB                   │CALCULATION UNIT│
   4                      └──────────────┘

                          ┌──────────────┐
                          │ SEARCH UNIT  │  15
                          └──────────────┘

                          ┌──────────────┐
                          │ OUTPUT UNIT  │  16  ──> OUTPUT OF RESULT
                          └──────────────┘
```

FIG. 3

20

21A  21B  21C  21D

PRODUCT

STATION A   STATION B   STATION C   STATION D

FIG. 4A

<JOB DB 2>

| JOB ID | PRECEDENCE CONSTRAINT NUMBER PAIR | JOB TIME [s] | SKILL LEVEL | TOOL/ EQUIPMENT | COST OF DEVELOPING ROBOTIZATION (1,000 YEN) | OPERATOR NUMBER BEFORE RE-CONFIGURATION |
|---|---|---|---|---|---|---|
| 00 | #0-0 | 4 | 1 | JIGS A, B EQUIPMENT A | 100 | 1 |
| 01 | #1-0 | 3 | 1 | TOOL A | 200 | 2 |
| 02 | #1-1 | 5 | 2 | TOOLS B, C | 100,000 | 2 |
| . . . | . . . | . . . | . . . | . . . | . . . | . . . |

FIG. 4B

<TOOL/EQUIPMENT/ROBOT DB>

| TOOL/ EQUIPMENT/ ROBOT | DEPRECIATION (1,000 YEN/YEAR) | RUNNING COST (YEN/HOUR) | REASSIGNMENT COST (1,000 YEN) |
|---|---|---|---|
| JIG A | 10 | 1 | 1 |
| EQUIPMENT A | 2,000 | 100 | 1,000 |
| ROBOT A | 1,000 | 50 | 10 |
| . . . | . . . | . . . | . . . |

FIG. 5A

<LABOR COST DB (SKILL LEVEL BASIS) 4>

| SKILL LEVEL | BASE SALARY (10,000 YEN/ MONTH) |
|---|---|
| 1 | 20 |
| 2 | 22 |
| 3 | 24 |
| . . . | . . . |

FIG. 5B

<LABOR COST DB (INDIVIDUAL BASIS) 4'>

| PERSON | BASE SALARY (10,000 YEN/ MONTH) | SKILL LEVEL |
|---|---|---|
| A | 20 | 1 |
| B | 23 | 2 |
| C | 35 | 5 |
| . . . | . . . | . . . |

FIG. 6

EP 3 327 641 A1

FIG. 7

FIG. 8A

FIG. 8B

FIG. 9

FIG. 10

FIG. 11

FIG. 12

<OVERALL PROCESS>

START

S10

DATA INPUT

S12

CREATE INITIAL ASSIGNMENT PLAN

S14

GENERATE NEIGHBORHOOD SOLUTIONS

S16

EXCLUDE NEIGHBORHOOD SOLUTION
VIOLATING PRECEDENCE CONSTRAINT

S18

PROCESS FOR SETTING OBJECTIVE
FUNCTION TO BE CALCULATED

S20

PROCESS FOR CALCULATING OBJECTIVE
FUNCTION TO BE CALCULATED

S22

SPECIFY BEST NEIGHBORHOOD SOLUTION

S24

UPDATE

S26

STOPPING
CONDITION IS MET?    N

Y

S28

OUTPUT RESULT

END

FIG. 13

<PROCESS FOR SETTING OBJECTIVE
FUNCTION TO BE CALCULATED>

# FIG. 14

<PROCESS FOR CALCULATING OBJECTIVE FUNCTION (1)>

START

INITIALIZE MEMORY POOL — S102

SELECT ONE OPERATOR THAT HAS NOT BEEN SELECTED — S104

S106
IS THERE JOB THAT HAS NOT BEEN SELECTED? N

Y

SELECT ONE OF JOBS THAT HAVE NOT BEEN SELECTED — S108

S110
IS THERE TOOL/EQUIPMENT THAT HAS NOT BEEN SELECTED? N

Y

SELECT ONE OF TOOLS/EQUIPMENT THAT HAVE NOT BEEN SELECTED — S112

S114
ALREADY STORED IN MEMORY POOL? Y

N

STORE IN MEMORY POOL — S116

S118
ADD COST OF TOOL/EQUIPMENT STORED IN MEMORY POOL TO OBJECTIVE FUNCTION (1)

S120
HAVE ALL OPERATORS BEEN SELECTED? N

Y

END

## FIG. 15

\<PROCESS FOR CALCULATING OBJECTIVE FUNCTION (2)\>

```
                    ( START )
S202
              SELECT ONE JOB THAT
              HAS NOT BEEN SELECTED

                                      S204
                     HAS OPERATOR          N
                     BEEN CHANGED?

                          Y
                                      S206
                       IS THERE
              TOOL/EQUIPMENT THAT HAS NOT    N
                    BEEN SELECTED?

                          Y
                                      S208
              SELECT ONE TOOL/EQUIPMENT
              THAT HAS NOT BEEN SELECTED

                                      S210
              OBTAIN REASSIGNMENT COST
              OF SELECTED TOOL/EQUIPMENT

                                      S212
              CONVERT INTO COST PER DAY BASED
              ON INTERVAL OF RECONFIGURATION

                                      S214
              ADD TO OBJECTIVE
              FUNCTION (2)
                                              S216
                                       IS THERE       Y
                                  JOB THAT HAS NOT BEEN
                                       SELECTED?

                                          N
                                        ( END )
```

**FIG. 16**

<PROCESS FOR CALCULATING OBJECTIVE FUNCTION (3)>

START

S300
IS THERE JOB THAT HAS NOT BEEN SELECTED AMONG JOBS ASSIGNED TO ROBOT?

N → END

Y

S302
SELECT ONE OF JOBS THAT HAVE NOT BEEN SELECTED

S304
OBTAIN COST FOR ROBOTIZING SELECTED JOB

S306
CONVERT INTO COST PER DAY BASED ON INTERVAL OF RECONFIGURATION

S308
ADD TO OBJECTIVE FUNCTION (3)

FIG. 17

<PROCESS FOR CALCULATING OBJECTIVE FUNCTION (4)>

```
                    ( START )

              S400
        IS THERE
   ROBOT THAT HAS NOT BEEN         N
        SELECTED?

        Y      S402

   SELECT ONE OF ROBOTS THAT
   HAVE NOT BEEN SELECTED

              S404

   CALCULATE OPERATING TIME PER
   PRODUCT FROM JOB TIMES OF        ( END )
   JOBS ASSIGNED TO SELECTED ROBOT

                    S406

   ADD CALCULATED OPERATING
   TIME, RUNNING COST OF SELECTED
   ROBOT, AND NUMBER OF PRODUCTS
   MANUFACTURED PER DAY TO
   OBJECTIVE FUNCTION (4)
```

## FIG. 18

<PROCESS FOR CALCULATING OBJECTIVE FUNCTION (5)>

```
        ( START )                    S500
             │
             ▼
    INITIALIZE MEMORY POOL
             │
             ▼
      ┌──────────────┐              S502
   ┌─►│  IS THERE     │
   │  │ WORKER THAT HAS NOT BEEN │──N──┐
   │  │   SELECTED?    │              │
   │  └──────────────┘               │
   │        │Y            S504        │
   │        ▼                         │
   │  SELECT ONE OF WORKERS THAT      │
   │   HAVE NOT BEEN SELECTED         │
   │        │              S506       │
   │        ▼                         │
   │   CALCULATE TOTAL JOB            │
   │   TIME FROM ASSIGNED JOBS        │
   │        │                         │
   │        ▼            S508         │
   │  ┌──────────────┐               │
   │  │   GREATER      │              │
   └──│THAN VALUE STORED IN MEMORY│   │
   N  │     POOL?      │              │
      └──────────────┘               │
             │Y          S510         │
             ▼                         │
       UPDATE MEMORY POOL            │
             │                        │
             └──────────────┘        │
                                      │
                    ┌─────────────────┘
                    ▼
              INITIALIZE     ─S512
              SELECTION
                    │
                    ▼
      ┌──────────────┐              S514
   ┌─►│  IS THERE     │
   │  │ WORKER THAT HAS NOT BEEN │──N──┐
   │  │   SELECTED?    │              │
   │  └──────────────┘               ▼
   │        │Y            S516     ( END )
   │        ▼
   │  SELECT ONE OF WORKERS
   │  THAT HAVE NOT BEEN SELECTED
   │        │              S518
   │        ▼
   │   OBTAIN SKILL LEVELS
   │  REQUIRED FOR ASSIGNED JOBS      S520
   │        │
   │        ▼
   │  CALCULATE COST PER UNIT TIME FROM
   │  BASE SALARY ACCORDING TO SKILL
   │  LEVEL, MULTIPLY COST BY
   │  P(t + sΔt), ADD RESULTANT
   │  VALUE TO OBJECTIVE FUNCTION (5)
   │        │
   └────────┘
```

CALCULATE COST PER UNIT TIME FROM BASE SALARY ACCORDING TO SKILL LEVEL, MULTIPLY COST BY $P(t + s\Delta t)$, ADD RESULTANT VALUE TO OBJECTIVE FUNCTION (5)

FIG. 19

<PROCESS FOR CALCULATING OBJECTIVE FUNCTION (6)>

START — S500

INITIALIZE MEMORY POOL

S502
IS THERE WORKER THAT HAS NOT BEEN SELECTED? — N

Y — S504
SELECT ONE OF WORKERS THAT HAVE NOT BEEN SELECTED

S506
CALCULATE TOTAL JOB TIME FROM ASSIGNED JOBS

S508
GREATER THAN VALUE STORED IN MEMORY POOL? — N

Y — S510
UPDATE MEMORY POOL

S620
CALCULATE COST PER UNIT TIME FROM PREDETERMINED BASE SALARY, MULTIPLY COST BY P(t + s△t), ADD RESULTANT VALUE TO OBJECTIVE FUNCTION (6)

END

FIG. 20

FIG. 21

FIG. 22

FIG. 23

FIG. 24B

FIG. 24A

FIG. 25

<JOB DB 102>

| JOB ID | PRECEDENCE CONSTRAINT NUMBER PAIR | JOB TIME [s] | OPERATOR NUMBER BEFORE REARRANGEMENT | PENALTY VALUE DUE TO OPERATOR CHANGE |
|--------|-----------------------------------|--------------|--------------------------------------|--------------------------------------|
| 00 | #0-0 | 4 | 1 | 3 |
| 01 | #1-0 | 3 | 2 | 1 |
| 02 | #1-1 | 5 | 2 | 1 |
| ⋮ | ⋮ | ⋮ | ⋮ | ⋮ |

FIG. 26

FIG. 27

```
                    ┌─────────────┐
                    │    START    │
                    └──────┬──────┘
                           │
              ┌────────────┴────────────┐
              │       DATA INPUT        ├──── S1010
              └────────────┬────────────┘
                           │
      ┌────────────────────┴────────────────────┐
      │ CALCULATE OPERATOR ADDED/DELETED POSITION ├──── S1012
      └────────────────────┬────────────────────┘
                           │
          ┌────────────────┴────────────────┐
          │   CREATE INITIAL ASSIGNMENT PLAN ├──── S1014
          └────────────────┬────────────────┘
                           │
          ┌────────────────┴────────────────┐
     ┌───▶│  GENERATE NEIGHBORHOOD SOLUTIONS  ├──── S1016
     │    └────────────────┬────────────────┘
     │                     │
     │    ┌────────────────┴────────────────┐
     │    │      CALCULATE PENALTY VALUE      │
     │    │     CORRESPONDING TO NUMBER OF    ├──── S1018
     │    │ VIOLATIONS OF PRECEDENCE CONSTRAINT│
     │    └────────────────┬────────────────┘
     │                     │
     │    ┌────────────────┴────────────────┐
     │    │ CALCULATE PENALTY VALUE FROM RESIDUAL│
     │    │       SUM OF SQUARES (L2 NORM) OF     ├──── S1020
     │    │  INDIVIDUAL CYCLE TIMES OF OPERATORS  │
     │    │       AND AVERAGE OF CYCLE TIMES      │
     │    └────────────────┬────────────────┘
     │                     │
     │    ┌────────────────┴────────────────┐
     │    │  CALCULATE PENALTY VALUE CORRE-   │
     │    │ SPONDING TO NUMBER OF JOBS EACH   │
     │    │ ASSIGNED TO OPERATOR DIFFERENT FROM├──── S1022
     │    │ OPERATOR TO WHICH JOB WAS          │
     │    │ ASSIGNED BEFORE REARRANGEMENT      │
     │    └────────────────┬────────────────┘
     │                     │
     │              ╱──────┴──────╲   S1024
     │      N     ╱ UPDATE ASSIGNMENT╲
     ◀───────────╲     PLAN?        ╱
     │            ╲────────┬───────╱
     │                    Y│
     │           ┌─────────┴─────────┐
     │           │      UPDATE       ├──── S1026
     │           └─────────┬─────────┘
     │                     │  S1028
     │              ╱──────┴──────╲
     │      N     ╱   STOPPING     ╲
     └───────────╲ CONDITION IS MET?╱
                  ╲────────┬───────╱
                          Y│  S1030
                 ┌─────────┴─────────┐
                 │   OUTPUT RESULT   │
                 └─────────┬─────────┘
                           │
                    ┌──────┴──────┐
                    │     END     │
                    └─────────────┘
```

FIG. 28

S1022

START

S1050

OBTAIN ASSIGNMENT STATUS OF
JOB THAT HAS NOT BEEN OBTAINED

S1052

HAS OPERATOR
BEEN CHANGED?          N

Y

S1054

FALL INTO
EXCEPTIONS?          Y

N          S1056

ADD PENALTY VALUE

S1058

N     HAVE ASSIGNMENT
STATUSES OF ALL JOBS BEEN
OBTAINED?

Y

RETURN

50

## FIG. 29A

ADD TWO OPERATORS TO FIVE OPERATORS

N = 5, d = 2

| 1 | 2 | 3 | 4 | 5 |
|---|---|---|---|---|

$5/3 \fallingdotseq 1.7$   $2 \times 5/3 \fallingdotseq 3.3$

| 1 | 2 | 3 | 4 | 5 |
|---|---|---|---|---|

ADD      ADD

## FIG. 29B

DELETE TWO OPERATORS FROM FIVE OPERATORS

N = 5, d = 2

| 1 | 2 | 3 | 4 | 5 |
|---|---|---|---|---|

$5/3 \fallingdotseq 1.7$   $2 \times 5/3 \fallingdotseq 3.3$

| 1 | 2 | 3 | 4 | 5 |
|---|---|---|---|---|

DELETE      DELETE

## FIG. 29C

ADD FIVE OPERATORS TO TWO OPERATORS

N = 2, d = 5

| ADDI-TION | ADDI-TION | ADDI-TION | ADDI-TION | ADDI-TION |
|---|---|---|---|---|

$5/3 \fallingdotseq 1.7$   $2 \times 5/3 \fallingdotseq 3.3$

| ADDI-TION | ADDI-TION | ADDI-TION | ADDI-TION | ADDI-TION |
|---|---|---|---|---|

1      2

FIG. 30

Europäisches
Patentamt

European
Patent Office

Office européen
des brevets

# EUROPEAN SEARCH REPORT

Application Number

EP 17 19 6520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 249 120 A (FOLEY MICHAEL [US]) 28 September 1993 (1993-09-28) * column 2, line 16 - column 5, line 5 * * column 6, line 26 - column 7, line 37 * ----- | 1-17 | INV. G06Q10/06 |

TECHNICAL FIELDS
SEARCHED     (IPC)

G06Q

The present search report has been drawn up for all claims

| Place of search | Date of completion of the search | Examiner |
|---|---|---|
| Munich | 19 April 2018 | Hasubek, Bodo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 19 6520

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2018

| Patent document cited in search report | | Publication date | Patent family member(s) | Publication date |
|---|---|---|---|---|
| US 5249120 | A | 28-09-1993 | NONE | |

EPO FORM P0459

For more details about this annex : see Official Journal of the European Patent Office, No. 12/82

**EP 3 327 641 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7287730 A
- JP 7182425 A